# EUROPEAN PATENT SPECIFICATION

(11) **EP 4 528 521 B1**
(45) Date of publication and mention of the grant of the patent: **19.08.2026**
(21) Application number: 24728002.7
(22) Date of filing: 20.05.2024
(51) Int. Cl.: G06F 13/10, G06F 13/14, G06F 13/42, G06F 13/24, G06F 13/40, H04L 12/40, G06F 1/3215, G06F 1/3234

(54) **ELECTRONIC DEVICE AND METHOD FOR PROCESSING DATA ON BASIS OF RF SWITCH**
ELEKTRONISCHE VORRICHTUNG UND VERFAHREN ZUR VERARBEITUNG VON DATEN AUF BASIS EINES HF-SCHALTERS
DISPOSITIF ÉLECTRONIQUE ET PROCÉDÉ DE TRAITEMENT DE DONNÉES SUR LA BASE D'UN COMMUTATEUR RF

(30) Priority: 29.07.2023 KR 20230099257; 12.10.2023 KR 20230136303
(43) Date of publication of application: 26.03.2025
(73) Proprietor: Samsung Electronics Co., Ltd, Suwon-si, Gyeonggi-do 16677 (KR)
(72) Inventor: LEE, Daehwan, Yeongtong-gu, Suwon-si Gyeonggi-do 16677 (KR); JUN, Intae, Yeongtong-gu, Suwon-si Gyeonggi-do 16677 (KR); KIM, Daeho, Yeongtong-gu, Suwon-si Gyeonggi-do 16677 (KR)
(74) Representative: Gulde & Partner
(86) International application number: PCT/KR2024/006808
(87) International publication number: WO 2025/028766

(56) References cited:
- KR-A- 20090 105 459
- KR-A- 20090 105 459
- KR-A- 20150 139 452
- KR-A- 20230 049 421
- KR-B1- 101 752 544
- US-A1- 2019 155 782
- US-A1- 2023 205 714

## Description

### [Technical Field]

The disclosure relates to an electronic device and a method for processing data based on a radio frequency switch.

### [Background Art]

An external electronic device may be mounted onto an electronic device. For example, a cover or an input device (e.g., keyboard, touch pad) for an electronic device may be attached to the electronic device. For example, the electronic device may be connected through a serial interface with such an external electronic device. The electronic device may be configured to receive data from the external electronic device or transmit data to the external electronic device.

The above information may be presented as related arts only to assist with an understanding of the disclosure. No determination has been made, and no assertion is made, as to whether any of the aforementioned might be applicable as a prior art with regard to the disclosure.

Conventional devices are disclosed in US 2023/205714 A1 and KR 2009 0105459 A.

### [Disclosure]

### [Technical Solution]

The present invention is set out in the appended set of claims.

According to embodiments, an electronic device according to claim 1 is provided.

According to embodiments, an electronic device is provided. The electronic device may comprise a control circuit, at least one input circuit, and a serial interface for connecting to an external electronic device. The control circuit may be configured to receive a start signal from the external electronic device while the electronic device and the external electronic device are connected, identify whether a user input is received through the at least one input circuit within a designated period, transmit data for the user input to the external electronic device through the serial interface in case that the user input is received through the at least one input circuit within the designated period, and transmit check data to the external electronic device through the serial interface in case that the user input is not received through the at least one input circuit within the designated period.

According to embodiments, an electronic device is provided. The electronic device may comprise a serial interface for connecting to an external electronic device, a radio frequency (RF) switch including a plurality of ports, and at least one processor connected to the RF switch. The RF switch may be configured to connect selectively one of the plurality of ports to the serial interface. The plurality of ports may include a first interrupt port for detecting whether the electronic device and the external electronic device are connected or not, a transmission port for transmitting a signal to the external electronic device, a reception port for receiving a signal from the external electronic device, and a second interrupt port for a power saving state. The at least one processor may be configured to control the RF switch to connect the second interrupt port of the plurality of ports to the serial interface based on detecting an event for entering the power saving state while the external electronic device and the electronic device are connected, change a state of the electronic device from the power saving state to a normal power state based on input data received from the external electronic device or user input data, control the RF switch to the transmission port of the plurality of ports to the serial interface in the normal power state, transmit a start signal to the external electronic device through the RF switch and the serial interface while the transmission port is connected to the serial interface, and control the RF switch to connect the reception port of the plurality of ports to the serial interface in response to the transmission of the start signal.

### [Description of Drawings]

FIG. 1 illustrates a block diagram of an electronic device in a network environment.
FIGS. 2A and 2B illustrate examples of an electronic device and an external electronic device.
FIG. 3A illustrates components of an electronic device.
FIG. 3B illustrates components of an external electronic device.
FIG. 4 illustrates components for a radio frequency (RF) switch of an electronic device.
FIGS. 5A and 5B illustrate examples of an RF switch.
FIG. 6 illustrates an example of an interrupt of an RF switch.
FIG. 7 illustrates an example of an operation flow of an electronic device for interrupt control using an RF switch.
FIG. 8 illustrates an example of an interrupt control using an RF switch.
FIG. 9 illustrates an example of an operation flow of an electronic device for connection with an external electronic device.
FIG. 10 illustrates an example of an operation flow of an electronic device for receiving data from an external electronic device.
FIG. 11 illustrates an example of an operation flow of an external electronic device for transmitting data to an electronic device.
FIG. 12 illustrates an example of a signal flow between an electronic device and an external electronic device.
FIG. 13 illustrates an example of a signal flow between an electronic device and an external electronic device in a power saving state.
FIG. 14 illustrates an example of a signal flow between an electronic device and an external electronic device for changing from a power saving state to a normal power state according to a keyboard input.
FIG. 15 illustrates an example of a signal flow between an electronic device and an external electronic device for changing from a power saving state to a normal power state according to a user input.
FIG. 16 illustrates an example of data communication between an electronic device and an external electronic device.

### [Mode For Carrying Out Invention]

The terms used in the disclosure are merely used to better describe a certain embodiment and may not be intended to limit the scope of other embodiments. A singular expression may include a plural expression, unless the context clearly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

As used in the following description, terms referring to signals (e.g., signal, information, data, etc.), terms referring to states (e.g., state, mode, operation, etc.), terms referring to operational state (e.g., step, operation, procedure, etc.), terms referring to network entities, terms referring to components of a device or apparatus, and so on are exemplified for convenience of description.

Further, throughout the disclosure, an expression such as e.g., 'more than' or 'less than' may be used to determine whether a specific condition is satisfied or fulfilled or not, but it is merely of a description for expressing an example and is not intended to exclude the meaning of 'more than or equal to' or 'less than or equal to'. A condition described as 'more than or equal to' may be replaced with 'more than', a condition described as 'less than or equal to' may be replaced with 'less than', and a condition described as 'more than or equal to and less than' may be replaced with 'more than and less than or equal to', respectively. Furthermore, hereinafter, 'A' to 'B' may refer to at least one of the elements from A (including A) to B (including B). Hereinafter, 'C' and/or 'D' may refer to including at least one of 'C' or 'D', that is, {'C', 'D', or 'C' and 'D'}.

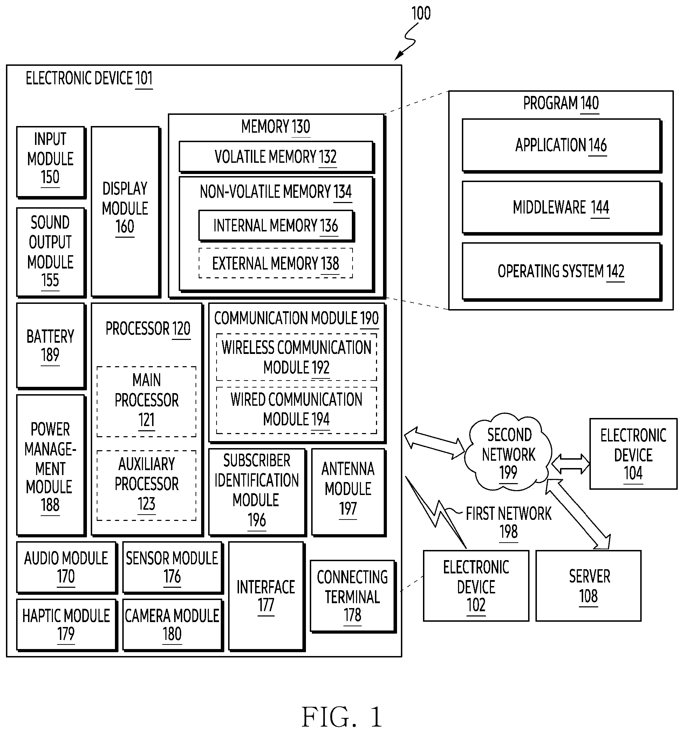

FIG. 1 illustrates a block diagram of an electronic device in a network environment according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mm Wave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another example of the disclosure, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

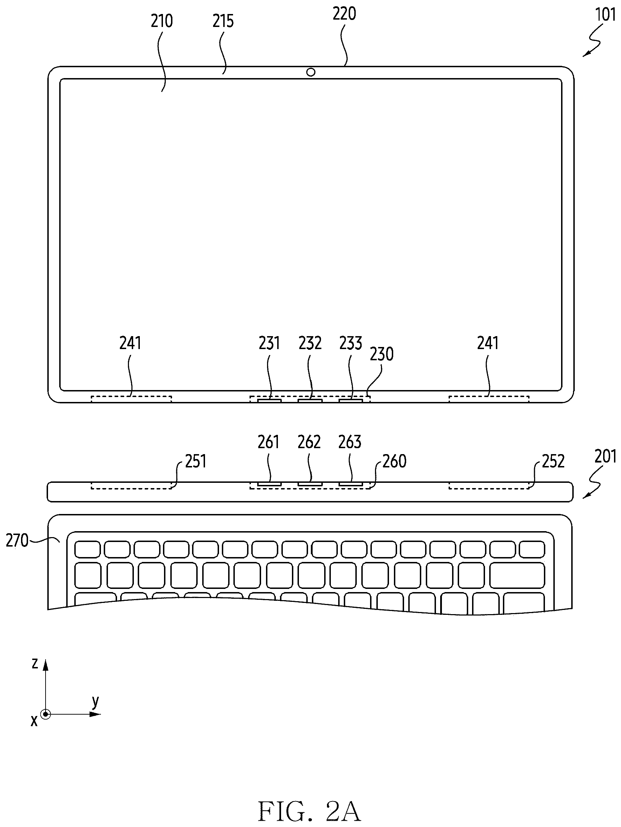

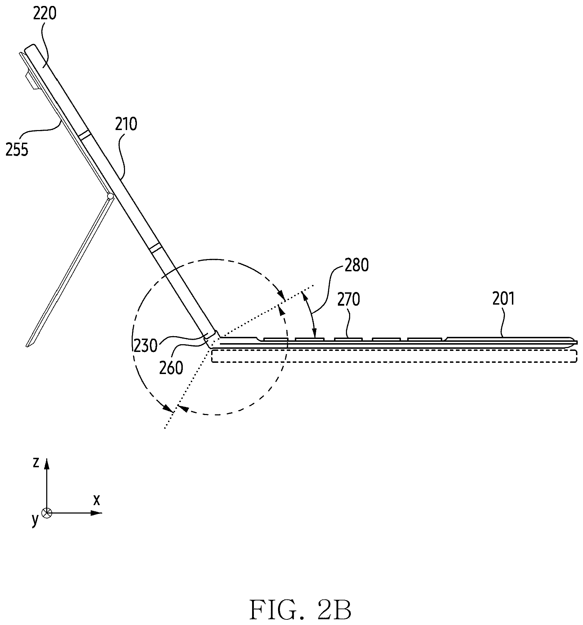

FIGS. 2A and 2B illustrate examples of an electronic device (e.g., an electronic device 101) and an external electronic device (e.g., an external electronic device 201).

Referring to FIG. 2A, the electronic device 101 may be connected to the external electronic device 201. The electronic device 101 may include a display 210 (e.g., the display module 160). The electronic device 101 may include a bezel area 215. The electronic device 101 may include a housing 220. The electronic device 101 may be connected to the external electronic device 201 through a serial interface 230. For example, the serial interface 230 may include a plurality of conductive members. The plurality of conductive members may include a first conductive member 231, a second conductive member 232, and a third conductive member 233. For example, each conductive member of the plurality of conductive members may include a pogo pin. The first conductive member 231 may be used for supplying power. The second conductive member 232 may be used for transmitting and receiving data. The third conductive member 233 may be used for a ground. The electronic device 101 may be coupled with the external electronic device 201. The electronic device 101 may include a connection member 241 and a connection member 242 such that the external electronic device 201 may be stably coupled to the electronic device 101. For example, the connection member 241 and the connection member 242 may include a magnet, respectively.

The external electronic device 201 may provide an input means for the electronic device 101. For example, the external electronic device 201 may include a keyboard 270. The external electronic device 201 may be coupled to the electronic device 101. The external electronic device 201 may include a connection member 251 and a connection member 252 so as to be stably coupled to the electronic device 101. For example, each of the connection member 251 and the connection member 252 may include a magnet. The connection member 251 may be in contact with the connection member 241 of the electronic device 101. For example, the polarity of the connection member 241 may be opposite to the polarity of the connection member 251. Owing to an attraction force between the magnets, the external electronic device 201 may be attached to the electronic device 101. The connection member 252 may be in contact with the connection member 242 of the electronic device 101. For example, the polarity of the connection member 242 may be opposite to the polarity of the connection member 252. Due to the attraction force between the magnets, the external electronic device 201 may be attached to the electronic device 101.

The external electronic device 201 may be connected to the electronic device 101 through a serial interface 260. For example, the serial interface 260 may include a plurality of conductive members. The plurality of conductive members may include a first conductive member 261, a second conductive member 262, and a third conductive member 263. For example, each conductive member of the plurality of conductive members may include a pogo pin. The first conductive member 261 may be used for supplying power. The second conductive member 262 may be used for transmitting and receiving data. The third conductive member 263 may be used for a ground.

The serial interface 260 of the external electronic device 201 may be associated with the serial interface 230 of the electronic device 101. The conductive members of the serial interface 260 of the external electronic device 201 may interact with the conductive members of the serial interface 230 of the electronic device 101. For example, the first conductive member 261 and the first conductive member 231 may be in contact with each other, and an electrical path for power may be formed therebetween. Electric power may be supplied from the electronic device 101 to the external electronic device 201 through the first conductive member 231 and the first conductive member 261. For example, the second conductive member 262 may be in contact with the second conductive member 232, and an electrical path for a signal may be formed therebetween. The electrical path may be referred to as a signal line. Through the second conductive member 232 and the second conductive member 262, a signal may be transmitted from the electronic device 101 to the external electronic device 201 or data may be transmitted from the external electronic device 201 to the electronic device 101. For example, the third conductive member 263 may be in contact with the third conductive member 233, and an electrical path for a ground may be formed therebetween. The electrical path may be referred to as a ground line. Through the third conductive member 233 and the third conductive member 262, a stable potential for a signal transmission between the electronic device 101 and the external electronic device 201 may be provided.

Referring to FIG. 2B, the electronic device 101 may be connected to the external electronic device 201. For example, the serial interface 230 of the electronic device 101 and the serial interface 260 of the external electronic device 201 may be connected to each other. Although not illustrated in FIG. 2B, the external electronic device 201 may be attached to the electronic device 101 due to the attractive force between the connection members (e.g., magnets) of the electronic device 101 and the connection members (e.g., magnets) of the external electronic device 201. While the external electronic device 201 is attached to the electronic device 101, a structure including the external electronic device 201 and the electronic device 101 may have various postures. For setting the postures, a cover 255 may be disposed on one surface (e.g., a surface opposite to the direction in which the display 210 faces) of the electronic device 101. Various modes may be defined according to an angle 280 formed by the external electronic device 201 and the display 210. For example, when the angle 280 is within a first range (e.g., about 0 degree or more and less than about 30 degrees), the electronic device 101 may operate in a closed mode. For example, when the angle 280 is within a second range (e.g., about 30 degrees or more and less than about 240 degrees), the electronic device 101 may operate in a standing mode. For example, when the angle 280 is within a third range (e.g., about 240 degrees or more and less than about 360 degrees), the electronic device 101 may operate in a back-flip mode.

In FIGS. 2A and 2B, it is described that the electronic device 101 includes a tablet computer, and the external electronic device 201 includes an input device (e.g., a keyboard or a touchpad) for the tablet computer, as an example. For example, the electronic device 101 may include a smartphone, and the external electronic device 201 may include a battery for the smartphone. For example, the electronic device 101 may include a notebook computer, and the external electronic device 201 may include a cover for the notebook computer. For example, the electronic device 101 may include a wearable device, and the external electronic device 201 may include an input device (e.g., a controller or another wearable device) for the wearable device. For example, the electronic device 101 may include a tablet computer, and the external electronic device 201 may include an input device (e.g., a stylus pen) for the wearable device.

Productivity in using the electronic device 101 may be enhanced through the external electronic device 201. Communication between the electronic device 101 and the external electronic device 201 may be performed via the serial interface 230 and the serial interface 260. For example, the electronic device 101 and the external electronic device 201 may use 1-wire communication. For the 1-wire communication, it is assumed that the electronic device 101 includes a chip such as e.g., a field programmable gate array (FPGA) or a micro control unit (MCU). The electronic device 101 may interpret data transferred via the 1-wire communication and may transmit the interpreted data to a processor (e.g., the processor 120) via an inter-integrated circuit (I2C) or serial peripheral interface (SPI) communication scheme. The chip has to operate periodically in order to interpret and transmit the data, and thus, its current consumption will increase. Accordingly, the electronic device 101 according to embodiments of the disclosure may use an RF switch without using a separate chip such as an FPGA or an MCU, in performing communication between the electronic device 101 and the external electronic device 201.

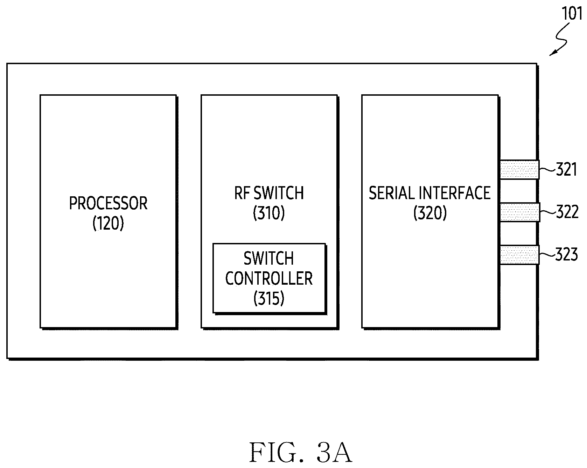

FIG. 3A illustrates components of an electronic device (e.g., the electronic device 101).

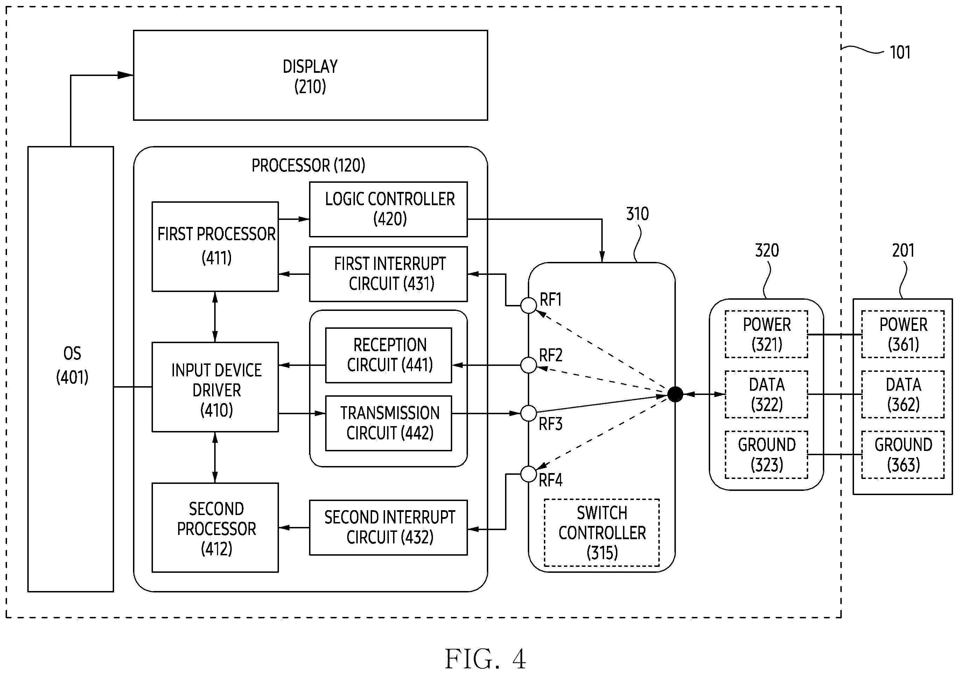

Referring to FIG. 3A, the electronic device 101 includes a processor (e.g., the processor 120), an RF switch 310, and a serial interface 320. The electronic device 101 includes the processor 120. The processor 120 may control overall operations of the electronic device 101. For example, the processor 120 may include an application processor (AP). Components of the processor 120 may be implemented in hardware, software, or a combination of hardware and software. According to an embodiment, the processor 120 may include circuits for processing a signal detected through the RF switch 310, a signal transmitted through the RF switch 310, and a signal received through the RF switch 310. For example, the processor 120 may include an interrupt circuit for detecting occurrence of an interrupt through the RF switch 310. For example, the processor 120 may include a reception circuit for receiving a signal from the RF switch 310. For example, the processor 120 may include a transmission circuit for transmitting a signal to the RF switch 310. According to an embodiment, the processor 120 may include one or more sub-processors for controlling the RF switch 310. For example, the processor 120 may include a sub-processor for controlling the interrupt circuit. For example, the processor 120 may include a driver (e.g., an input device driver) for controlling the reception circuit and the transmission circuit. The processor 120 may be referred to as a control unit or a control means. The processor 120 will be described in detail with reference to FIG. 4.

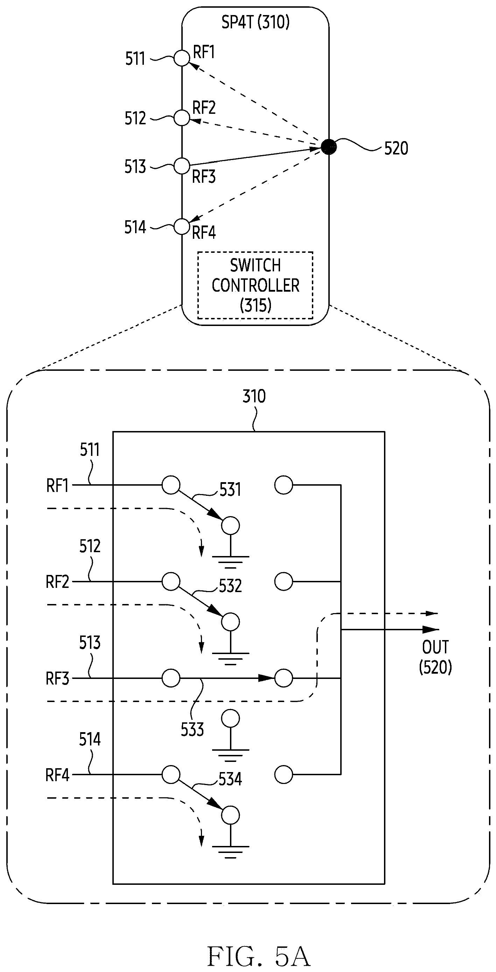

The electronic device 101 includes the switch 310. The RF switch 310 may be a device for passing or blocking an RF signal via a transmission path. The RF switch 310 may include a plurality of ports to pass signals of various frequencies. For example, the RF switch 310 may include a single pole n throw (SPNT) switch. The pole may correspond to a terminal for connection to the serial interface 310. Each throw may correspond to a port of the RF switch 310. The RF switch 310 may include a plurality of switches. Each switch of the plurality of switches may be connected to a serial interface (e.g., the serial interface 320). For example, the RF switch 310 may include a switch for each throw. The switch may be selectively configured to connect either a port to the terminal or to a ground. In other words, each switch of the plurality of switches may be connected to the processor 120 through an individual port. The RF switch 310 may include a switch controller 315. The processor 120 may transmit a control signal to the RF switch 310. The switch controller 315 may select one port from among a plurality of ports of the RF switch 310 based on the control signal. The RF switch 310 may connect the selected port to a terminal according to the control signal. The RF switch 310 will be described in detail with reference to FIGS. 5A to 5B.

The electronic device 101 includes a serial interface 320. The serial interface 320 represents a component for performing serial communication. The serial interface 320 may include a communication interface adapted for transmitting a signal to an external electronic device (e.g., the external electronic device 201) or receiving a signal from the external electronic device 201. The electronic device 101 may arrange data in series and transmit the arranged data to the external electronic device 201 through one signal line. The electronic device 101 may receive the data arranged in series from the external electronic device 201 through the signal line. The serial interface 320 may include a power connection part 321, a signal connection part 322, and a ground connection part 323. The power connection part 321 may be coupled to a power connection part of the external electronic device 201. For example, a power line may be formed with physical contact between a conductive member (e.g., a pogo pin) of the power connection part 321 and a conductive member (e.g., a pogo pin) of the power connection part of the external electronic device 201. The signal connection part 322 may be coupled to a signal connection part of the external electronic device 201. For example, a signal line may be formed with physical contact between a conductive member (e.g., a pogo pin) of the signal connection part 322 and a conductive member (e.g., a pogo pin) of the signal connection part of the external electronic device 201. The ground connection part 323 may be coupled to a ground connection part of the external electronic device 201. For example, a ground line may be formed with physical contact between a conductive member (e.g., a pogo pin) of the ground connection part 323 and a conductive member (e.g., a pogo pin) of the ground connection part of the external electronic device 201.

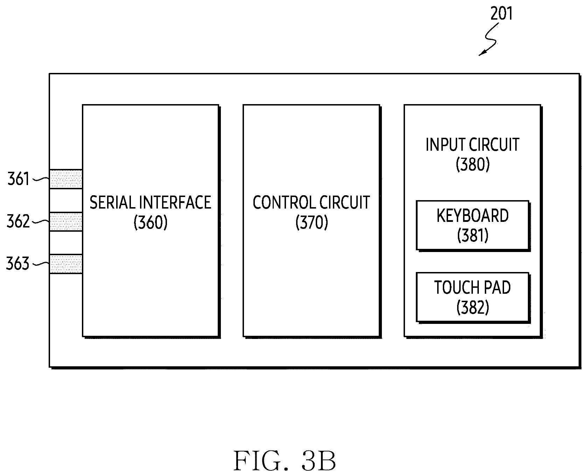

FIG. 3B illustrates components of an external electronic device (e.g., the external electronic device 201).

Referring to FIG. 3B, the external electronic device 201 may include a serial interface 360, a control circuit 370, and an input circuit 380.

The external electronic device 201 includes the serial interface 360. The serial interface 360 represents a component for performing serial communication. The serial interface 360 may include a communication interface for transmitting a signal to an electronic device (e.g., the electronic device 101) or receiving a signal from the electronic device 101. The external electronic device 201 may arrange data in series and transmit the arranged data to the electronic device 101 via one signal line. The external electronic device 201 may receive the data arranged in series from the electronic device 101 through the signal line. The serial interface 360 may include a power connection part 361, a signal connection part 362, and a ground connection part 363. The power connection part 361 may be coupled to a power connection part (e.g., the power connection part 321) of the electronic device 101. For example, a power line may be formed with physical contact between a conductive member (e.g., a pogo pin) of the power connection part 321 of the electronic device 101 and a conductive member (e.g., a pogo pin) of the power connection part 361 of the external electronic device 201. The signal connection part 362 may be coupled to a signal connection part (e.g., the signal connection part 322) of the electronic device 101. For example, a signal line may be formed with physical contact between a conductive member (e.g., a pogo pin) of the signal connection part 322 of the electronic device 101 and a conductive member (e.g., a pogo pin) of the signal connection part 362 of the external electronic device 201. The ground connection part 363 may be coupled to a ground connection part (e.g., the ground connection part 323) of the electronic device 101. For example, a ground line may be formed with physical contact between a conductive member (e.g., a pogo pin) of the ground connection part 323 of the electronic device 101 and a conductive member (e.g., a pogo pin) of the ground connection part 363 of the external electronic device 201.

The external electronic device 201 may include the control circuit 370. For example, the control circuit 370 may include an FPGA or an MCU. The control circuit 370 may be configured to process received data. For example, the control circuit 370 may decode the data received through the serial interface 360, and may transmit the decoded data to an input circuit 380 (e.g., a keyboard 381 and a touch pad 382). For example, the control circuit 370 may process a user input obtained through the input circuit 380 (e.g., the keyboard 381 or the touchpad 382) according to a serial communication protocol, and may transmit the processed data to the serial interface 360. According to an embodiment, the control circuit 370 may obtain a signal received from the electronic device 101. According to the signal, the control circuit 370 may set up the external electronic device 201. For example, the control circuit 370 may obtain a start signal from the electronic device 101. The control circuit 370 may control the external electronic device 201 to operate from a standby state for receiving signals to a transmit state for transmitting signals to the electronic device 101. The control circuit 370 may obtain a stop signal from the electronic device 101. The control circuit 370 may control the external electronic device 201 to operate from the transmit state for transmitting signals to the standby state for receiving signals.

FIG. 4 illustrates components for an RF switch (e.g., the RF switch 310) of an electronic device (e.g., the electronic device 101). FIGS. 2, 3A, and 3B may be referenced to describe operations of the electronic device 101 and the external electronic device (e.g., the external electronic device 201). The same reference numerals may be used for substantially the same description.

Referring to FIG. 4, the electronic device 101 includes a processor 120, an RF switch 310, and a serial interface 320. FIG. 3A may be referred to for a description of the processor 120, the RF switch 310, and the serial interface 320. The electronic device 101 may include a display 210. The display 210 may display a screen to a user of the electronic device 101 according to a program running on an operating system (OS) 401. For example, when a word processing program is executed, the electronic device 101 may display a screen for displaying text according to a user input. According to an embodiment, the display 210 may include a touch panel. An electrical signal corresponding to the user input (e.g., a touch input) on the display 210 may be transmitted to the processor 120. The processor 120 may process the electrical signal. For example, the processor 120 may change a state of the electronic device 101 from a power saving mode to a normal power mode, or may control the display 210 to display an interaction according to the user input.

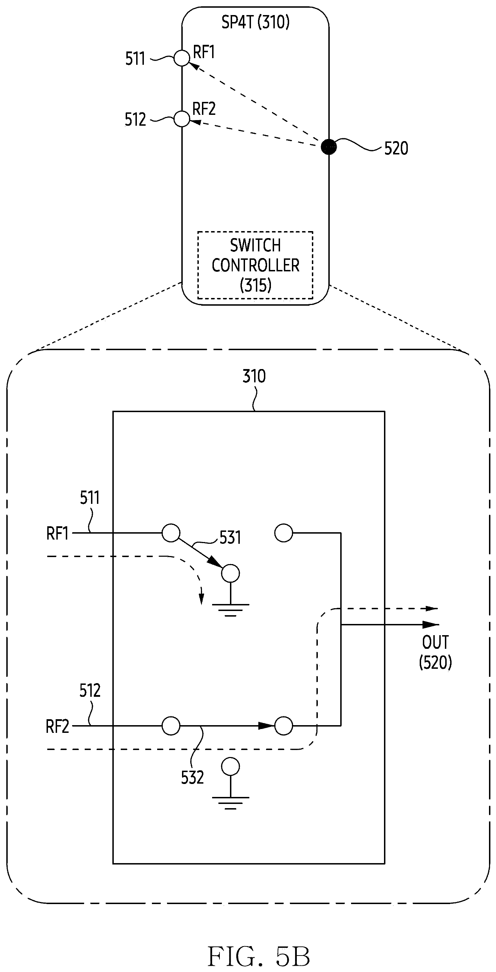

The electronic device 101 according to embodiments of the disclosure includes the RF switch 310 disposed between the serial interface 320 and the processor 120. The RF switch 310 includes a plurality of ports and one terminal to selectively control a path through which an RF signal is transmitted. The RF switch 310 may electrically connect each port of the plurality of ports to the one terminal under the control of the processor 120. For example, the RF switch 310 may include a single pole four throw (SP4T) switch of FIG. 5A. For example, the RF switch 310 may include a single pole dual throw (SPDT) of FIG. 5B. Hereinafter, FIG. 4 illustrates an example of the RF switch 301 including the SP4T switch. A switch for controlling ports for detecting interrupts and ports for transmitting and receiving interrupts, to be described later, such as e.g., SPDT, SP3T, DP4T, etc., may be understood as an embodiment of the present disclosure.

In order to process the operation of the RF switch 310, the processor 120 may include various components. According to an embodiment, the processor 120 may include a first processor 411. The first processor 411 may be used to generally handle and manage the operating system (OS). The first processor 411 may be used to detect an interrupt occurring in the RF switch 310. The first processor 411 and the operations of the first processor 411 may be implemented not only in physical hardware, but also in software or a combination of hardware and software. The first processor 411 may be replaced with a main processor, a first arbitrator, a first arbitration circuit, a first arbitration unit, a main arbitrator, a main arbitration circuit, a main arbitration unit, or a term having a technical meaning equivalent thereto, in terms of performing a role of adjusting an input device driver 410 and a first interrupt circuit 431 to be described later. According to an embodiment, the processor 120 may include a second processor 412. The second processor 412 may be used to perform specific tasks (e.g., measurement using a sensor) with low power (e.g., with a minimum power) when the system enters a power saving mode. The second processor 412 may be used to detect an interrupt occurring in the RF switch 310. The second processor 412 and the operations of the second processor 412 may be implemented not only in physical hardware, but also in software or a combination of hardware and software. The second processor 412 may be replaced with a low-power processor, a second arbitrator, a second arbitration circuit, a second arbitration unit, a sub arbitrator, a sub arbitration unit, a sub arbitration circuit, or a term having a technical meaning equivalent thereto in terms of performing a role of adjusting the input device driver 410 and the second interrupt circuit 432 to be described later.

The processor 120 may include the input device driver 410 as a program for processing input/output data with the external electronic device 201. The input device driver 410 may be used to connect the external electronic device 201 connected to the electronic device 101 to the OS 401. The input device driver 410 may include circuits for processing signals generated from a connection between the external electronic device 201 and the electronic device 101. The processor 120 may include a circuit for detecting an interrupt generated as the external electronic device 201 is attached to the electronic device 101. For example, the processor 120 may include a first interrupt circuit 431 (or a first interrupt handler) and a second interrupt circuit 442 (or a second interrupt handler). The processor 120 may include circuits for processing an RF signal to be received from the RF switch 310 or to be transmitted to the RF switch 310. For example, the processor 120 may include a reception circuit 441. The processor 120 may include a transmission circuit 442.

According to an embodiment, the processor 120 may control the RF switch 310. The processor 120 may control the RF switch 310 to change a connection state of the RF switch 310. The processor 120 may control the RF switch 310 to change a port connected to the serial interface 320 in the RF switch 310. The processor 120 may include a logic controller 420 for controlling the RF switch 310. For example, the processor 120 may transmit a control signal to the RF switch 310 through the logic controller 420. The switch controller 315 of the RF switch 310 may change the connection state of the RF switch 310 according to the control signal.

The electronic device 101 may be connected to the external electronic device 201. The electronic device 101 and the external electronic device 201 may be connected using a serial communication protocol. For the serial communication protocol, the serial interface 320 of the electronic device 101 and the serial interface 360 of the external electronic device 201 may be combined with each other. The electronic device 101 may transmit serial data to the external electronic device 201. The external electronic device 201 may transmit the serial data to the electronic device 101.

RF paths may be formed through the serial interface 320 and the serial interface 360. For example, a power line 481 may be formed via the power connection part 321 of the electronic device 101 and the power connection part 361 of the external electronic device 201. For example, a signal line 482 may be formed via the signal connection part 322 of the electronic device 101 and the signal connection part 362 of the external electronic device 201. For example, a ground line 483 may be formed via the ground connection part 323 of the electronic device 101 and the ground connection part 363 of the external electronic device 201.

Serial communication between the electronic device 101 and the external electronic device 201 may be performed through the signal line 482. For example, serial data from the external electronic device 201 may be transmitted to the serial interface 320 of the electronic device 101 via the signal line 482. A terminal of the RF switch 310 may be electrically connected to the signal line 482 of the serial interface 320. The terminal of the RF switch 310 may be electrically connected to one of a plurality of ports of the RF switch 310, under the control of the switch controller 315. For example, the port may include a reception port. The serial data from the external electronic device 201 may be transmitted to the processor 120 through the signal line 482, the serial interface 320, and the RF switch 310. For example, the serial data from the electronic device 101 may be generated by the processor 120. The processor 120 may transmit the serial data to the RF switch 310. The terminal of the RF switch 310 may be electrically connected to one of the plurality of ports of the RF switch 310 under the control of the switch controller 315. For example, the port may include a transmission port. The terminal of the RF switch 310 may be electrically connected to the signal line 482 of the serial interface 320. The serial data may be transmitted to the serial interface 320 of the electronic device 101 via the transmission port. The serial data may be transmitted to the external electronic device 201 via the signal line 482.

FIGS. 5A and 5B illustrate examples of an RF switch (e.g., the RF switch 310).

Referring to FIG. 5A, the RF switch 310 may include an SP4T switch. The SP4T switch may include one pole and four throws. Each throw may correspond to a port. The four throws may correspond to four ports, respectively. For example, the RF switch 310 may include a first RF port 511, a second RF port 512, a third RF port 513, and a fourth RF port 514. The pole may correspond to a terminal 520 for connection to a serial interface (e.g., the serial interface 320). According to an embodiment, the RF switch 310 may operate based on the control of the processor 120. For example, the processor 120 may transmit a control signal to the RF switch 310. The RF switch 310 may include a switch controller 315. The RF switch 310 may select a port from among a plurality of ports (e.g., the first RF port 511, the second RF port 512, the third RF port 513, and the fourth RF port 514) of the RF switch 310, based on the control signal. The RF switch 310 may connect the selected port to the terminal 520 according to the control signal. According to an embodiment, the first RF port 511 and/or the fourth RF port 514 may be used to detect an interrupt with a change in voltage when the external electronic device 201 is mounted onto the electronic device 101. The second RF port 512 may be used to obtain an RF signal from the external electronic device 201. The third RF port 513 may be used to provide the RF signal from the external electronic device 201 to the electronic device 101.

The RF switch 310 may selectively process RF signals of various frequencies. In order to configure an RF path for a specific frequency, the RF switch 310 may connect a port corresponding to the specific frequency to the terminal 520. The RF switch 310 may include a plurality of switches to connect one of a plurality of ports to the terminal 520. The plurality of switches may include a first switch 531, a second switch 532, a third switch 533, and a fourth switch 534. For example, the RF switch 310 may include the first switch 531 configured to selectively connect the first RF port 511 and the terminal 520. For example, the RF switch 310 may include the second switch 532 configured to selectively connect the second RF port 512 and the terminal 520. For example, the RF switch 310 may include the third switch 533 configured to selectively connect the third RF port 513 and the terminal 520. For example, the RF switch 310 may include the fourth switch 534 configured to selectively connect the fourth RF port 514 and the terminal 520.

Unlike a normal analog switch, the RF switch 310 may cause an unnecessary signal before and after its connection due to the characteristics of the RF frequency. The RF switch 310 generally requires a high blocking characteristic for an open port. Accordingly, when changing the port to be connected, the RF switch 310 may connect ports other than the port connected to the terminal 520, to the ground. For example, the RF switch 310 may change a state in which the first RF port 511 and the terminal 520 are connected, to a state in which the third RF port 513 and the terminal 520 are connected. As the third RF port 513 and the terminal 520 are connected to each other, the first RF port 511 may be connected to the ground. In addition to the third RF port 513, other ports (e.g., the first RF port 511, the second RF port 512, and the fourth RF port 514) may be connected to the ground. The port in an off state of the RF switch 310 may have a ground characteristic rather than a floating state.

FIG. 5A illustrates the SP4T switch. A switch for controlling ports for detection of interrupts and ports for transmission and reception of interrupts may be understood as an embodiment of the disclosure.

Referring to FIG. 5B, the RF switch 310 may include an SPDT switch. The SPDT switch may include one pole and two throws. Each throw may correspond to a port. The two throws may correspond to two ports. For example, the RF switch 310 may include a first RF port 511 and a second RF port 512. The pole may correspond to the terminal 520 for connection to a serial interface (e.g., the serial interface 320). According to an embodiment, the RF switch 310 may operate based on the control of the processor 120. For example, the processor 120 may transmit a control signal to the RF switch 310. The RF switch 310 may include a switch controller 315. The RF switch 310 may select a port from among a plurality of ports (e.g., the first RF port 511 and the second RF port 512) of the RF switch 310, based on the control signal. The RF switch 310 may connect the selected port to the terminal 520 according to the control signal. According to an embodiment, the first RF port 511 may be used to detect an interrupt with a change in voltage, when the external electronic device 201 is mounted onto the electronic device 101. The second RF port 512 may be used to obtain an RF signal from the external electronic device 201.

The RF switch 310 may selectively process RF signals of various frequencies. In order to configure an RF path for a specific frequency, the RF switch 310 may connect a port corresponding to the specific frequency to the terminal 520. The RF switch 310 may include a plurality of switches to connect one of the plurality of ports to the terminal 520. The plurality of switches may include a first switch 531 and a second switch 532. For example, the RF switch 310 may include the first switch 531 configured to selectively connect between the first RF port 511 and the terminal 520. For example, the RF switch 310 may include the second switch 532 configured to selectively connect between the second RF port 512 and the terminal 520. In order to alleviate unnecessary signals that may occur due to its high frequency characteristics, the RF switch 310 may utilize a ground. For example, the RF switch 310 may change the state in which the first RF port 511 and the terminal 520 are connected, to the state in which the second RF port 512 and the terminal 520 are connected. As the second RF port 512 and the terminal 520 are connected to each other, the first RF port 511 may be connected to the ground. A port (e.g., the first RF port 511) other than the second RF port 512 may be connected to the ground. The first RF port 511 in an off state may have a ground characteristic.

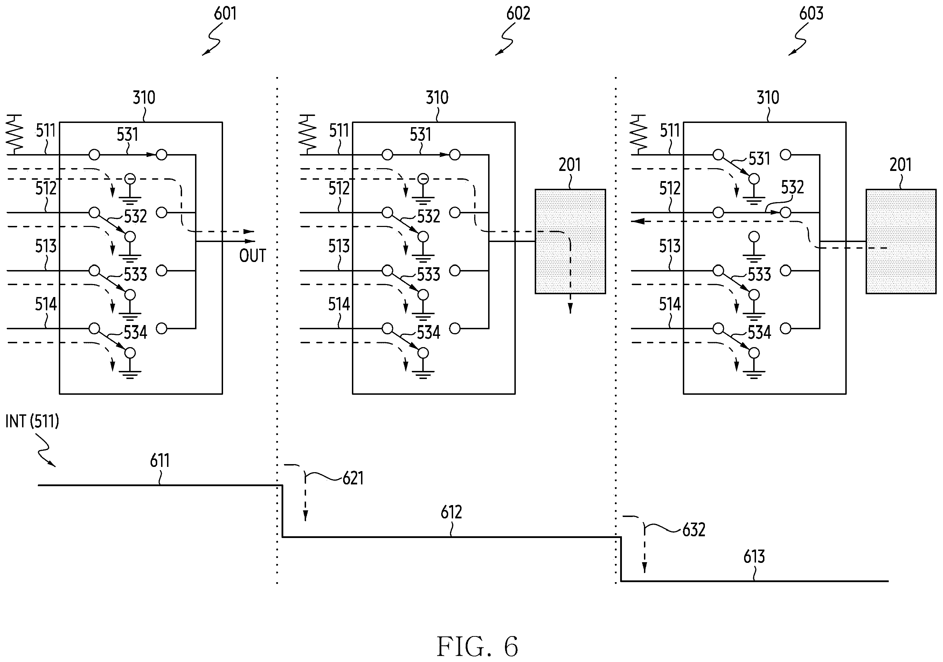

FIG. 6 illustrates an example of an interrupt of an RF switch (e.g., the RF switch 310). FIGS. 2 to 4 may be referenced to describe the operations of the electronic device 101 and the external electronic device (e.g., the external electronic device 201). FIGS. 5A and 5B may be referenced to describe the operation of the RF switch 310. The same reference numerals may be used for substantially the same description.

Referring to FIG. 6, a first state 601 may be a state in which the external electronic device 201 is not connected to the electronic device 101. When the external electronic device 201 is not connected to the electronic device 101, the terminal 520 may be in an open state. The electronic device 101 (e.g., the processor 120) may control the RF switch 310 to connect the first RF port 511 to the terminal 520. The first RF port 511 may be used to determine whether the external electronic device 201 is attached to the electronic device 101 or not. For example, as the external electronic device 201 is not attached to the electronic device 101, a first voltage 611 (e.g., 1.8 V (voltage)) may be identified for the first RF port 511.

A second state 602 may be a state in which the external electronic device 201 is connected to the electronic device 101. When the external electronic device 201 is attached to the electronic device 101, the conductive members of the serial interface (e.g., the serial interface 360) of the external electronic device 201 may be in contact with the conductive members of the serial interface (e.g., the serial interface 320) of the electronic device 101, thereby forming a signal path for serial communication. The first RF port 511 may be used to determine whether the external electronic device 201 is attached to the electronic device 101 or not. For example, as the external electronic device 201 is not attached to the electronic device 101, a second voltage 612 (e.g., 1.1V) may be identified for the first RF port 511. As the external electronic device 201 is attached to the electronic device 101, a load at an end terminal of the RF switch 310 may be changed. As the load is changed, a magnitude of the voltage applied to the first RF port 511 may be changed from the first voltage 611 to the second voltage 612. The processor 120 of the electronic device 101 detects occurrence of an interrupt (e.g., a falling edge interrupt), based on such a change (e.g., a voltage drop 621) from the first voltage 611 to the second voltage 612. For example, the processor 120 may detect that the external electronic device 201 is attached to the electronic device 101, using an interrupt circuit (e.g., the first interrupt circuit 431) connected to the first RF port 511.

When it is detected that the external electronic device 201 is connected to the electronic device 101, the electronic device 101 may change the port. The electronic device 101 may change the port connected to the RF switch 310 to receive a signal from the external electronic device 201 or to transmit a signal to the external electronic device 201. The first interrupt circuit 431 connected to the first RF port 511 is an interrupt handler and is a circuit for detecting a voltage change caused by attachment or detachment of the external electronic device 201. The first interrupt circuit 431 is different from a circuit for receiving serial data from the external electronic device 201 or transmitting serial data to the external electronic device 201. For example, the electronic device 101 may control the RF switch 310 to connect the port (e.g., the second RF port 512 and the third RF port 513) associated with the reception circuit 441 or the transmission circuit 442 to the terminal 520. Meanwhile, unlike a conventional analog switch, the RF switch 310 requires a high blocking characteristic for an open port, due to the characteristic of the RF frequency. The port connected to the terminal 520 may be changed from the first RF port 511 to the second RF port 512. As the second RF port 512 is connected to the terminal 520, the first RF port 511 may be connected to the ground. A magnitude of the voltage applied to the first RF port 511 may be changed from the second voltage 612 to the third voltage 613 (e.g., 0V). The processor 120 of the electronic device 101 detects occurrence of an interrupt (e.g., a falling interrupt), based on the change (e.g., a voltage drop 632) from the second voltage 612 to the third voltage 613. Even though the external electronic device 201 is attached to the electronic device 101, an interrupt is detected due to the voltage drop 632, which may result in an unintended operation. For example, as an additional interrupt is detected through an interrupt circuit (e.g., the first interrupt circuit 431) connected to the first RF port 511, the processor 120 may recognize that the external electronic device 201 has been detached. Due to such a port change, a voltage level for the first RF port 511 may be changed, and an unintended malfunction may occur.

In order to solve the above-described problem, the electronic device 101 (e.g., the processor 120) according to embodiments of the disclosure turns off a function (e.g., interrupt setting or monitoring function) of a port (e.g., the first RF port 511 or the fourth RF port 514) to be not used according to the change of the port, before changing the port of the RF switch 310. For example, the processor 120 may turn off the interrupt setting of the port to be not used. The processor 120 may be configured to cease processing of the interrupt, even though a voltage change (e.g., the voltage drop 632) is detected through the first interrupt circuit 431. The processor 120 disables the interrupt function, that is, monitoring for an interrupt port (e.g., the first RF port 511 and the fourth RF port 514). After disabling the monitoring for the interrupt port, the RF switch 310 may be controlled through the logic controller 420 such that another port (e.g., the third RF port 513) is connected to the terminal 520.

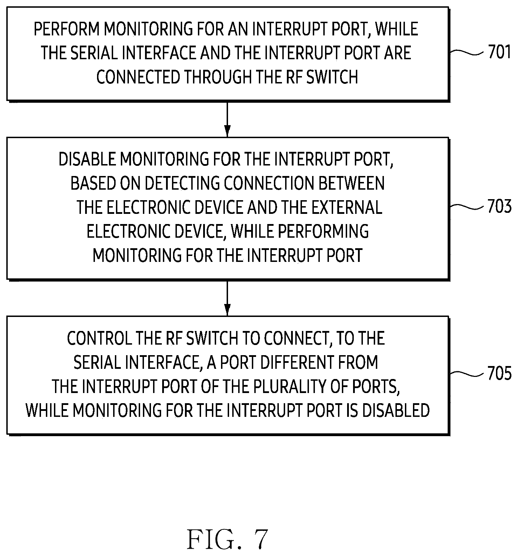

FIG. 7 illustrates an operation flow of an electronic device (e.g., the electronic device 101) for interrupt control using an RF switch (e.g., the RF switch 310).

Referring to FIG. 7, in operation 701, the electronic device 101 (e.g., the processor 120) performs monitoring for an interrupt port, while the serial interface (e.g., the serial interface 320) and the interrupt port (e.g., the first RF port 511, the fourth RF port 514) are connected through the RF switch 310. The interrupt port may be used to detect attachment or detachment of an external electronic device (e.g., the external electronic device 201). As the external electronic device 201 is detached from or attached to the electronic device 101, a voltage applied to the interrupt port may vary. The monitoring for the interrupt port may include obtaining information indicating that the external electronic device 201 is detached from or attached to the electronic device 101, using a change in the voltage. Through the change in the voltage, the processor 120 may obtain information indicating that the external electronic device 201 is detached from or attached to the electronic device 101.

In operation 703, the electronic device 101 (e.g., the processor 120) disables monitoring for the interrupt port (e.g., the first RF port 511), based on detecting the connection between the electronic device 101 and the external electronic device (e.g., the external electronic device 201), while performing monitoring for the interrupt port. The electronic device 101 may detect a connection between the electronic device 101 and the external electronic device 201. For example, as the external electronic device 201 is attached to the electronic device 101, the external electronic device 201 may be connected to the electronic device 101. A voltage drop (e.g., the voltage drop 621) may be caused due to the connection between the external electronic device 201 and the electronic device 101. The interrupt circuit (e.g., the first interrupt circuit 431) connected to the interrupt port may generate an electrical signal according to the voltage drop. The processor 120 may obtain information about the external electronic device 201 being attached (or connected) to the electronic device 101, based on the electrical signal.

The connection between the electronic device 101 and the external electronic device 201 may be used for serial communication. For example, the electronic device 101 may transmit a signal to the external electronic device 201 or receive data from the external electronic device 201. For the serial communication, the electronic device 101 may determine a port change of the RF switch 310. The RF switch 310 is currently connecting the interrupt port and the serial interface 320. For example, the processor 120 may determine a port change to the port (e.g., the second RF port 512, the third RF port 513) connected to a circuit (e.g., the reception circuit 441, the transmission circuit 442) for processing serial data.

The electronic device 101 may disable monitoring for the interrupt port (e.g., the first RF port 511). The port change may cause an additional interrupt according to a connection of the interrupt port to the ground. The electronic device 101 disables monitoring for the interrupt port, prior to the port change, such that the electronic device 101 does not perform any signal processing due to the interrupt. The disabling of the monitoring may indicate turning off of the interrupt setting of the interrupt port. As the interrupt setting is turned off, the processor 120 may be configured not to perform any processing according to a voltage drop (e.g., the voltage drop 632). For example, the processor 120 may be configured to cease processing of the interrupt even though a voltage change (e.g., the voltage drop 632) is detected through the first interrupt circuit 431.

In operation 705, while monitoring for the interrupt port (e.g., the first RF port 511) is disabled, the electronic device 101 connects the RF switch 310 to connect, to the serial interface 320, a port (e.g., the second RF port 512, the third RF port 513) different from the interrupt port (e.g., the first RF port 511, the fourth RF port 514) among the plurality of ports (e.g., the first RF port 511, the second RF port 512, the third RF port 513, and the fourth RF port 514). The connecting of the port to the serial interface 320 indicates that the port is connected to the external electronic device 201 via the serial interface 320. The electronic device 101 may perform serial communication with the external electronic device 201. For example, the processor 120 may control the RF switch 310 such that a circuit (e.g., the reception circuit 441, the transmission circuit 442) for processing serial data is connected to the serial interface 320. The electronic device 101 controls the RF switch 310 to connect the port to the serial interface 320, while the monitoring is disabled. In the electronic device 101, the interrupt port is connected to the ground while the monitoring is disabled. Since the interrupt port is connected to the ground, a voltage for the interrupt port may be changed. For example, the voltage may be changed from the second voltage 612 to the third voltage 613. Even if the voltage for the interrupt port is changed, the electronic device 101 may not perform any processing for changing of the voltage.

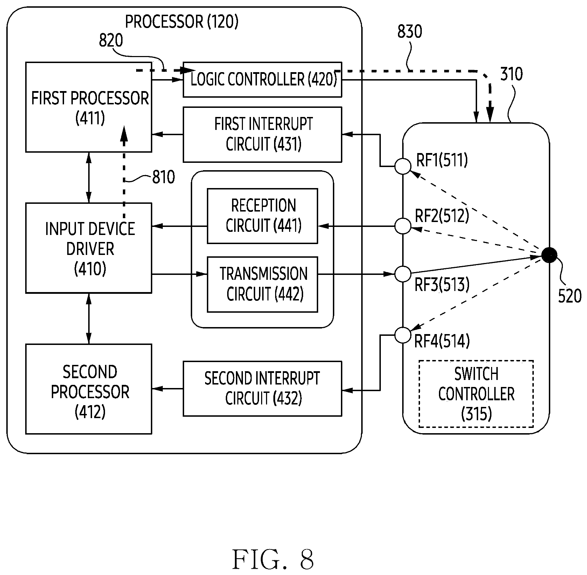

FIG. 8 illustrates an example of interrupt control using an RF switch (e.g., the RF switch 310). FIG. 8 illustrates a situation in which a first RF port 511 is an interrupt port and an external electronic device (e.g., the external electronic device 201) is attached to an electronic device (e.g., the electronic device 101). FIG. 4 may be referred to for describing an operation of the electronic device 101. The same reference numerals may be used for the same description.

Referring to FIG. 8, the terminal 520 of the RF switch 310 is connected to the serial interface 320 being connected to the serial interface (e.g., the serial interface 360) of the external electronic device 201. The RF switch 310 may connect the first RF port 511 and the serial interface 360 to each other. The first interrupt circuit 431 may monitor a voltage of the first RF port 511. When the voltage for the first RF port 511 is changed, the first interrupt circuit 431 may generate an interrupt signal. The generated interrupt signal may be provided to the input device driver 410 through the first processor 411. The processor 120 may determine a port change through the input device driver 410.

The input device driver 410 may transmit a command 810 for the port change to the first processor 411. According to an embodiment, the first processor 411 may disable monitoring for the port (e.g., the first RF port 511, the fourth RF port 514) to be not used when the port is changed, based on the command 810 for the port change. According to an embodiment, the processor 120 may be configured to cease processing for a voltage change of the port (e.g., the first RF port 511, the fourth RF port 514) to be not used. While the monitoring is disabled, the voltage change at the first RF port 511 may not be processed by the processor 120. For example, the processor 120 may turn off the setting for the first interrupt circuit 431. The first interrupt circuit 431 may not generate any signal (e.g., an interrupt signal) even if a voltage change greater than or equal to a threshold value occurs. For example, the processor 120 may disable one function of the first processor 411. Even if a signal is received from the first interrupt circuit 431, the processor 120 may control the first processor 411 not to perform processing of the signal. As with the first RF port 511, monitoring for the fourth RF port 514 for an interrupt operation may also be disabled. The voltage change in the fourth RF port 514 may not be processed by the processor 120. For example, the processor 120 may turn off the setting for the second interrupt circuit 432. The second interrupt circuit 432 may not generate any signal (e.g., an interrupt signal) even if a voltage change greater than or equal to a threshold value occurs. For example, the processor 120 may disable one function of the second processor 412. Even if a signal is received from the second interrupt circuit 432, the processor 120 may control the second processor 412 not to process the signal.

After deactivating the port of the RF switch 310, the first processor 411 may transmit a request signal 820 for a port change to the logic controller 420. The logic controller 420 may include a control circuit for changing the state of the RF switch 310. For example, the first processor 411 may transmit, to the logic controller 420, the request signal 820 for operating the RF switch 310 in a state that the second RF port 512 instead of the first RF port 511 currently set is connected to the external electronic device 201. For example, the first processor 411 may transmit, to the logic controller 420, the request signal 820 for operating the RF switch 310 in a state that the third RF port 513 instead of the first RF port 511 currently set is connected to the external electronic device 201.

The logic controller 420 may generate a control signal 830 based on the request signal 820. The logic controller 420 may transmit the control signal 830 to the RF switch 310 (e.g., the switch controller 315). For example, the logic controller 420 may include a control pin. The control signal 830 may be provided to the RF switch 310 through the control pin. For example, for the control pin, the logic controller 420 may perform a general-purpose input/output (GPIO) setting. The RF switch 310 may connect a port (e.g., the second RF port 512, the third RF port 513) according to the port change to the terminal 520, based on the control signal 830. The switch controller 315 of the RF switch 310 may control a switch (e.g., the second switch 532, the third switch 533) corresponding to the port to be connected to the terminal 520 instead of the ground, based on the control signal 830. For example, the switch controller 315 of the RF switch 310 may include a GPIO controller.

In FIG. 8, it is described a situation where the serial interface 360 is connected to the first RF port 511 and then to another port (e.g., the second RF port 512, the third RF port 513). The operations in FIG. 8 may be also equally applied to a scenario where the serial interface 360 is connected to the fourth RF port 514 and then to another port (e.g., the second RF port 512, the third RF port 513). For example, when the electronic device 101 is in a power saving mode, the RF switch 310 may be connecting the fourth RF port 514 and the serial interface 360. When the voltage for the fourth RF port 514 is changed, according to an embodiment, the second interrupt circuit 432 may generate an interrupt signal. The generated interrupt signal may be provided to the input device driver 410 via the second processor 412. Thereafter, the state of the RF switch 310 may be changed according to the command 810 of the input device driver 410, the request signal 820 of the first processor 411, and the control signal 830 of the logic controller 420.

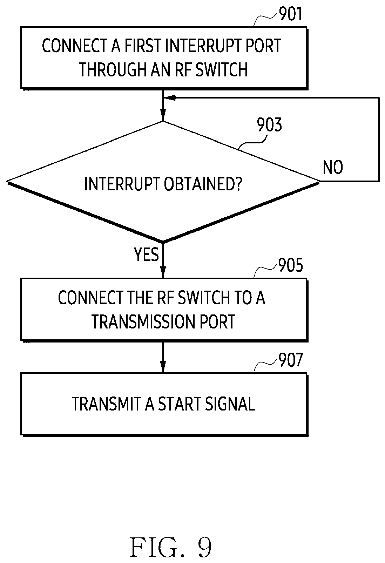

FIG. 9 illustrates an example of an operation flow of an electronic device (e.g., the electronic device 101) for connection with an external electronic device (e.g., the external electronic device 201).

Referring to FIG. 9, in operation 901, the electronic device 101 (e.g., the processor 120) may connect a first interrupt port (e.g., the first RF port 511) through an RF switch (e.g., the RF switch 310). The first interrupt port may be used to detect a magnitude of a voltage changed due to detachment or attachment of the external electronic device 201. The electronic device 101 may control the RF switch 310 such that the first interrupt port is connected to the external electronic device 201. The electronic device 101 may control the RF switch 310 such that the first interrupt port is connected to the serial interface 320 for connection with the external electronic device 201.

In operation 903, the electronic device 101 (e.g., the processor 120) may identify whether an interrupt is obtained. The electronic device 101 may perform monitoring for the first interrupt port. The electronic device 101 may obtain an interrupt based on a voltage for the first interrupt port. The interrupt may occur when the voltage is changed (e.g., when the voltage is changed by a threshold value or more). For example, the processor 120 may obtain the interrupt through an interrupt handler (e.g., the first interrupt circuit 431). When the interrupt is obtained, the electronic device 101 may perform operation 905. When the interrupt is not obtained, the electronic device 101 may perform operation 903 again.

In operation 905, the electronic device 101 (e.g., the processor 120) may connect the RF switch 310 to a transmission port (e.g., the third RF port 513). The transmission port may be used to transmit a signal to the external electronic device 201. The electronic device 101 may convert data to be transmitted into serial data for serial communication. The electronic device 101 may control the RF switch 310 such that a circuit (e.g., the transmission circuit 432) for the conversion is electrically connected to the external electronic device 201. The electronic device 101 may control the RF switch 310 such that the transmission port is connected to the serial interface 320 for connection with the external electronic device 201.

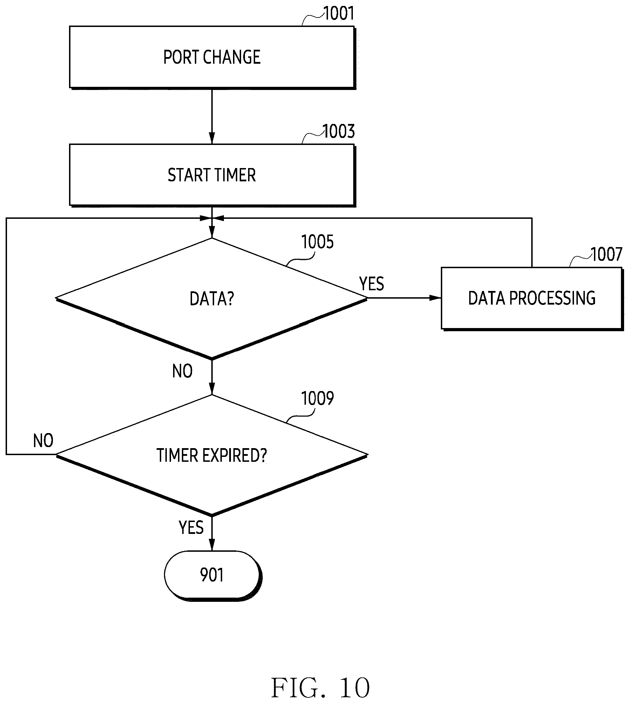

In operation 907, the electronic device 101 (e.g., the processor 120) may transmit a start signal. The electronic device 101 may transmit the start signal to the external electronic device 201. The start signal may indicate that it is ready to receive a user input, to the external electronic device 201. The electronic device 101 may transmit the start signal through the transmission port. After transmitting the start signal, the electronic device 101 may control the RF switch 310 to receive the user input from the external electronic device 201. The electronic device 101 may control the RF switch 310 to a state for receiving serial data. Hereinafter, operations of the electronic device 101 for receiving serial data will be described with reference to FIG. 10.

FIG. 10 illustrates an example of an operation flow of an electronic device (e.g., the electronic device 101) for receiving data of an external electronic device (e.g., the external electronic device 201).

In operation 1001, the electronic device 101 (e.g., the processor 120) may perform a port change. The electronic device 101 may control the RF switch 310 to a state for receiving serial data. As described with reference to FIG. 9, the electronic device 101 may transmit a start signal to the external electronic device 201 to inform that serial data can be received. The RF switch 310 may be connecting the transmission port to the external electronic device 201. The electronic device 101 may connect a circuit (e.g., the reception circuit 442) for processing serial data to the external electronic device 201. The electronic device 101 may control the RF switch 310 such that the reception port (e.g., the second RF port 512) corresponding to the reception circuit 442 is connected to the external electronic device 201.

In operation 1003, the electronic device 101 (e.g., the processor 120) may start a timer. The timer may be used to inform that the external electronic device 201 is detached from the electronic device 101. Since the reception port instead of the interrupt port is connected to the external electronic device 201, the electronic device 101 may identify whether the external electronic device 201 has been detached from the electronic device 101 through the timer. The external electronic device 201 may be configured to continuously transmit data after receiving the start signal. When data is received from the external electronic device 201, the timer may restart. Accordingly, when no data is received during a designated period of the timer, the electronic device 101 may identify that the external electronic device 201 has been separated from the electronic device 101.

In operation 1005, the electronic device 101 (e.g., the processor 120) may identify whether there is received data. The electronic device 101 may identify whether data received from the external electronic device 201 is in a buffer of the electronic device 101. In other words, the electronic device 101 may identify whether data is received from the external electronic device 201 during the designated period of the timer. For example, the data may include input data received through a keyboard (e.g., the keyboard 381) of the external electronic device 201. For example, the data may include input data received through a touch pad (e.g., the touch pad 382) of the external electronic device 201. For example, the data may include check data for informing that the external electronic device 201 is connected to the electronic device 101. If there is data received from the external electronic device 201, the electronic device 101 may perform operation 1007. If there is no data received from the external electronic device 201, the electronic device 101 may perform operation 1009.

In operation 1007, the electronic device 101 (e.g., the processor 120) may perform data processing. The electronic device 101 may perform data processing for the received data. For example, the electronic device 101 may transmit the received data to the input device driver 410 of the processor 120 via the reception circuit 441. The processor 120 may perform a processing operation according to the type of the received data through the input device driver 410. For example, when the received data is keyboard data, a value corresponding to the input key may be obtained and an operation related to the value may be displayed on a display (e.g., the display 210). For example, when the received data is touchpad data, the processor 120 may obtain coordinate information included in the received data and display an operation related to the coordinate information on the display. After processing the data, the electronic device 101 may perform operation 1005 again.

In operation 1009, the electronic device 101 (e.g., the processor 120) may identify whether a specified time has expired. The specified time may indicate a length of the timer. If the electronic device 101 does not receive any data from the external electronic device 201 for the specified time, the timer may expire. The expiration of the timer may indicate that the external electronic device 201 is separated from the electronic device 101. When the external electronic device 201 is disconnected from the electronic device 101, the electronic device 101 may enable monitoring for the interrupt port (e.g., the first RF port 511) to detect attachment of the external electronic device 201 again. When the specified time expires, the electronic device 101 may perform operation 901. If the specified time has not expired, the electronic device 101 may perform operation 1005 again.

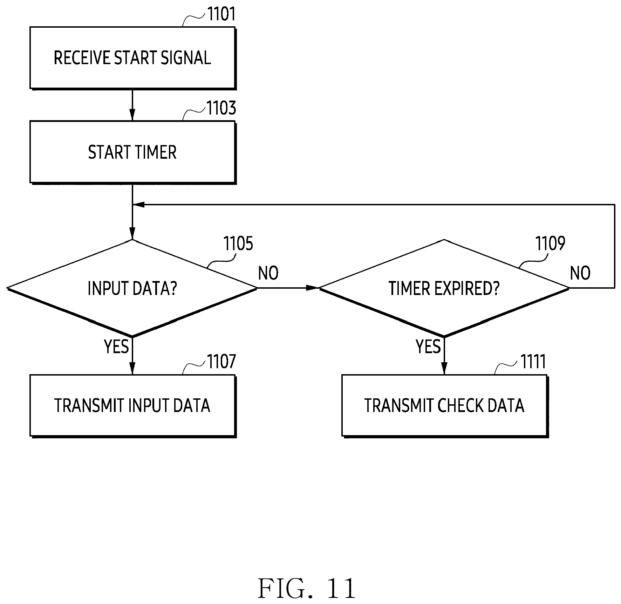

FIG. 11 illustrates an example of an operation flow of an external electronic device (e.g., the external electronic device 201) for transmitting data to an electronic device (e.g., the electronic device 101).

Referring to FIG. 11, in operation 1101, the external electronic device 201 (e.g., the control circuit 370) may receive a start signal. The start signal may indicate that the electronic device 101 is ready to receive data according to a user input from the external electronic device 201.

In operation 1103, the external electronic device 201 (e.g., the control circuit 370) may start the timer. The external electronic device 201 may start the timer in response to the start signal. The timer may restart when data is transmitted from the external electronic device 201 to the electronic device 101. Since the reception port instead of the interrupt port is connected to the external electronic device 201 through the RF switch 310 of the electronic device 101, the external electronic device 201 may be configured to continuously transmit data. Data transmitted from the external electronic device 201 may indicate to the electronic device 101 that the external electronic device 201 is in connection to the electronic device 101. The external electronic device 201 may be configured to continuously transmit data, after receiving the start signal. While the external electronic device 201 is connected to the electronic device 101, the external electronic device 201 may continuously transmit input data or check data received from the user to the electronic device 101. In one example, the external electronic device 201 may transmit data to the electronic device 101 at each designated period of the timer, no matter how late it is.

In operation 1105, the external electronic device 201 (e.g., the control circuit 370) may identify whether input data is received. When the input data is received, the external electronic device 201 may perform operation 1107. When no input data is received, the external electronic device 201 may perform operation 1109. The input data may be received through at least one input circuit of the external electronic device 201. For example, the input data may include data according to a key input on a keyboard (e.g., the keyboard 270 or the keyboard 381). For example, the input data may include data according to a touch input on a touch pad (e.g., the touch pad 382). For example, the input data may include data according to a pen input on a drawing pad.

In operation 1107, the external electronic device 201 (e.g., the control circuit 370) may transmit input data. The external electronic device 201 may convert the input data into a format in accordance with serial communication. The external electronic device 201 may transmit the converted input data to the electronic device 101 via a serial interface (e.g., the serial interface 360). After transmitting a start signal, the reception port of the RF switch 310 of the electronic device 101 is connected to the serial interface 320, and thus the electronic device 101 may receive the input data from the external electronic device 201 and process the received input data.

In operation 1109, the external electronic device 201 (e.g., the control circuit 370) may identify whether the specified time expires. The specified time may indicate a length of the timer in operation 1103. When the specified time expires, the external electronic device 201 may perform operation 1111. If the specified time has not yet expired, the external electronic device 201 may perform operation 1105 again.

In operation 1111, the external electronic device 201 (e.g., the control circuit 370) may transmit check data. The check data may indicate that the external electronic device 201 is being connected to the electronic device 101. Even if there is no input data from the user, the external electronic device 201 may transmit the check data to indicate that the electronic device 101 and the external electronic device 201 are being connected. The check data may be referred to, in addition to the check data, as a test signal, a check signal, a verification signal, a dummy signal, a reserve signal, reserve data, dummy data, verification data, test data, or any other term having a technical meaning equivalent thereto.

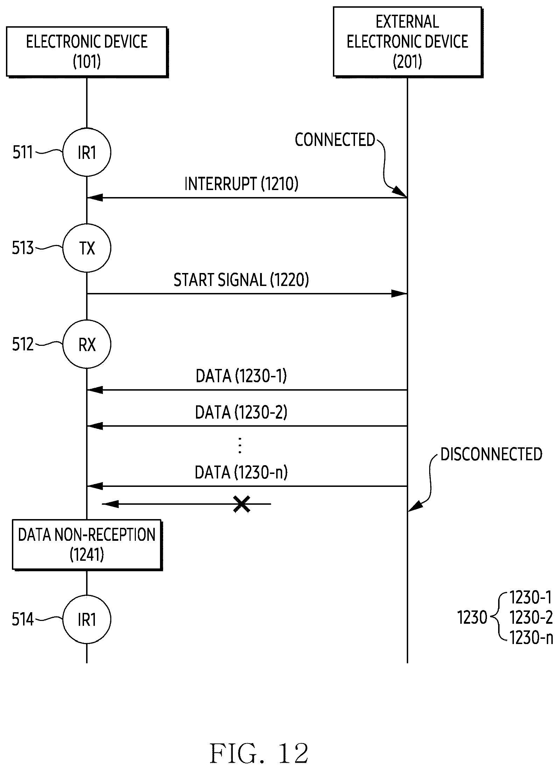

The electronic device 101 according to embodiments of the disclosure may control an RF switch (e.g., the RF switch 310) for interaction between the electronic device 101 and the external electronic device 201 (e.g., attachment of the external electronic device 201, keyboard input or touch input onto the external electronic device 201). According to an embodiment, the RF switch 310 may be a switch including four ports. For example, the RF switch 310 may be an SP4T switch. The four ports may include a first interrupt port (e.g., the first RF port 511) IR1, a reception port (e.g., the second RF port 512) RX, a transmission port (e.g., the third RF port 513) TX, and a second interrupt port (e.g., the fourth RF port 514) IR2. The operation of the electronic device 101 for serial communication may be determined based on the port to which a terminal (e.g., the terminal 520) of the RF switch 310 connected to the external electronic device 201 is connected, among the four ports. Hereinafter, referring to FIGS. 12 to 15, it will be described an example of a signal flow between the electronic device 101 and the external electronic device 201 according to an interaction between the electronic device 101 and the external electronic device 201. To describe the operation of the electronic device 101 in each signal flow, a state may be defined based on the port to which a terminal (e.g., the terminal 520) of the RF switch 310 is connected.

FIG. 12 illustrates an example of a signal flow between an electronic device (e.g., the electronic device 101) and an external electronic device (e.g., the external electronic device 201). Referring to FIG. 12, description is made of the RF switch 310 including four ports (e.g., a first interrupt port (e.g., the first RF port 511) IR1, a reception port (e.g., the second RF port 512) RX, a transmission port (e.g., the third RF port 513) TX, and a second interrupt port (e.g., the fourth RF port 514) IR2), as an example. In FIG. 12, the operation of the electronic device 101 may be understood as the operation of the processor 120 of the electronic device 101.

Referring to FIG. 12, the electronic device 101 (e.g., the processor 120) may control the RF switch 310 to connect the first interrupt port (e.g., the first RF port 511) to a serial interface (e.g., the serial interface 320) for the external electronic device 201. The RF switch 310 is connecting the first interrupt port 511 to the serial interface 320. When the external electronic device 201 is connected to the electronic device 101 while the first interrupt port 511 is connected to the serial interface 320, a magnitude of the voltage applied to the first interrupt port 511 may vary. An interrupt circuit (e.g., the first interrupt circuit 431) connected to the first interrupt port 511 may cause an interrupt 1210 depending on the voltage. The electronic device 101 may obtain the interrupt 1210 due to the connection between the external electronic device 201 and the electronic device 101, through the first interrupt circuit 431.

In response to the interrupt 1210, the electronic device 101 may control the RF switch 310 to connect the transmission port (e.g., the third RF port 513) to the serial interface 320. The electronic device 101 may identify that the external electronic device 201 is attached to the electronic device 101, based on the interrupt 1210. The electronic device 101 may identify that the external electronic device 201 has been connected to the electronic device 101. The electronic device 101 may perform communication with the external electronic device 201. The electronic device 101 may use a start signal 1220 to inform the external electronic device 201 that communication is possible. The electronic device 101 may control the RF switch 310 to connect the transmission port 513 to the serial interface 320 for transmitting the start signal 1220. The electronic device 101 may transmit the start signal 1220 through the transmission port 513. According to an embodiment, the electronic device 101 may disable monitoring for the first interrupt port 511, before the transmission port 513 is connected. When the transmission port 513 of the RF switch 310 is connected to a terminal (e.g., the terminal 520) for the serial interface 320, the first interrupt port 511 is connected to the ground. For example, the electronic device 101 may turn off the interrupt setting for the first interrupt port 511 so as not to perform processing for the voltage drop caused by the connection to the ground.

After transmitting the start signal 1220, the electronic device 101 may control the RF switch 310 to connect the reception port 512 to the serial interface 320. The electronic device 101 may receive data 1230 (e.g., keyboard data, touchpad data, or pen input data) input from the external electronic device 201. The electronic device 101 may continuously receive data (e.g., data 1230-1, data 1230-2, data 1230-3, ... data 1230-n) from the external electronic device 201, trough serial communication between the electronic device 101 and the external electronic device. The external electronic device 201 may be configured to continuously transmit data 1230, after receiving the start signal 1220. For example, while the external electronic device 201 is connected to the electronic device 101, the external electronic device 201 may continuously transmit input data or check data received from the user to the electronic device 101. Based on the start signal 1220, the external electronic device 201 may be configured to transmit the check data every designated period even if there is no data (e.g., keyboard data or touchpad data) input from the user.

For example, the serial communication between the electronic device 101 and the external electronic device 201 may include universal asynchronous receiver and transmitter (UART) communication. The state of the electronic device 101 may be 'UART_TX', and the state of the external electronic device 201 may be 'UART_RX'. After the start signal 1220 is transmitted, the state of the electronic device 101 may be changed from 'UART_TX' to 'UART_RX'. After the start signal 1220 is received, the state of the external electronic device 201 may be changed from 'UART_RX' to 'UART_TX'.

When the external electronic device 201 is disconnected from the electronic device 101, the external electronic device 201 may be no longer able to transmit data to the electronic device 101. The electronic device 101 may identify non-reception 1241 of data within a designated period. In other words, if data is not received from the external electronic device 201 within a period set in the external electronic device 201 to transmit monitoring data, the electronic device 101 may identify that the external electronic device 201 is disconnected from the electronic device 101. The electronic device 101 may control the RF switch 310 to identify whether the external electronic device 201 (or another device attached to the serial interface 320) is connected to the electronic device 101. The electronic device 101 (e.g., the processor 120) may control the RF switch 310 to connect the first interrupt port 511 to the serial interface 320. The electronic device 101 may enable monitoring for the disabled first interrupt port 511 again. The electronic device 101 may connect the first interrupt port 511 to the serial interface 320 and may enable monitoring for the first interrupt port 511. While the first interrupt port 511 is connected to the serial interface 320, the electronic device 101 may perform monitoring for the first interrupt port 511.

When there is no user input for a designated time duration or a user input is received for entering a power saving mode, the electronic device 101 may operate in the power saving state. Since data received from the external electronic device 201 cannot be continuously processed in the power saving state, the electronic device 101 may change the state of the RF switch 310. The state of the RF switch 310 may be changed depending on whether the electronic device 101 operates in the power saving state or the normal power state. Hereinafter, an example of a signal flow between the electronic device 101 and the external electronic device 201 in the power saving state and/or the normal power state will be described.

Hereinafter, in the disclosure, a normal power state indicates a state in which an electronic device is in use by a user. For example, when a touch input on the display 210 is valid, the electronic device 101 may be in the normal power state. The normal power state may also be referred to, in addition thereto, as a usual mode, a normal mode, a normal power mode, a usual power mode, a normal power state, a wake-up state, a screen-on state, an active state, a first state, a first mode, or a term having a technical meaning equivalent thereto.

Hereinafter, in the disclosure, the power saving state indicates a state of consuming the power lower than in the normal power state. Likewise, the normal power state indicates a state of consuming the power higher than in the power saving state. For example, when the touch input onto the display 210 is not valid, the electronic device 101 may be in the power saving state. In the power saving state, the screen of the electronic device 101 may be in an off state. The power saving state may be referred to, in addition to the power saving state, as a sleep state, a sleep mode, a low power state, a low power mode, an inactive mode, a second state, a second mode, a standby state, a standby mode, a screen-off state, a screen-off mode, a power saving mode, a power saving state, or any other term having a technical meaning equivalent thereto.

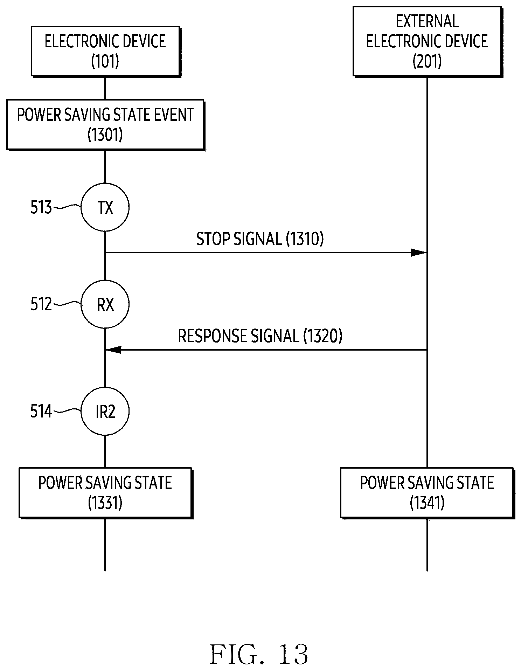

FIG. 13 illustrates an example of a signal flow between an electronic device (e.g., the electronic device 101) and an external electronic device (e.g., the external electronic device 201) in a power saving state. In FIG. 13, the RF switch 310 including four ports (e.g., a first interrupt port (e.g., a first RF port 511) IR1, a reception port (e.g., a second RF port 512) RX, a transmission port (e.g., a third RF port 513) TX, and a second interrupt port (e.g., a fourth RF port 514) IR2) is described as an example. In FIG. 13, a situation is described in which the electronic device 101 enters the power saving state in a state that the external electronic device 201 is connected to the electronic device 101. The operation of the electronic device 101 of FIG. 13 may be understood as the operation of the processor 120 of the electronic device 101.

Referring to FIG. 13, the electronic device 101 may detect an event 1301 (hereinafter, a power saving state event) for entering the power saving state. For example, the electronic device 101 may detect an event from the normal power state to the power saving state, through a user input to a power button of the electronic device 101. For example, if there is no user input for a specified time in the electronic device 101, the electronic device 101 may detect an event from the normal power state to the power saving state.

While the electronic device 101 is connected to the external electronic device 201, the electronic device 101 may be in a state for receiving data from the external electronic device 201. For example, the reception port 512 of the RF switch 310 is connected to the external electronic device 201 through the serial interface 320. The electronic device 101 may use a stop signal 1310 to notify the external electronic device 201 of entering the power saving state. The electronic device 101 may control the RF switch 310 to connect the transmission port 513 to the serial interface 320 to transmit the stop signal 1310. The electronic device 101 may transmit the stop signal 1310 through the transmission port 513.

After transmitting the stop signal 1310, the electronic device 101 may control the RF switch 310 to connect the reception port 512 to the serial interface 320. The electronic device 101 may control the RF switch 310 to receive a response to the stop signal 1310. The electronic device 101 may receive a response signal 1320 to the stop signal 1310 from the external electronic device 201. The external electronic device 201 may cease transmitting data after receiving the stop signal 1310. For example, the external electronic device 201 may no longer transmit check data that is scheduled to be transmitted periodically. The external electronic device 201 may cease transmitting the check data.

For example, the serial communication between the electronic device 101 and the external electronic device 201 may include UART communication. While receiving data from the external electronic device 101, the state of the electronic device 101 may be "UART_RX", and the state of the external electronic device 201 may be "UART_TX". To transmit the stop signal 1310, the state of the electronic device 101 may be changed from 'UART_RX' to 'UART_TX'. To receive the stop signal 1310, the state of the external electronic device 101 may be changed from 'UART_TX' to 'UART_RX'. In order to receive the response signal 1320 after transmitting the stop signal 1310, the state of the electronic device 101 may be changed from 'UART_TX' to 'UART_RX'. In order to transmit the response signal 1320 after receiving the stop signal 1310, the state of the external electronic device 201 may be changed from 'UART_RX' to 'UART_TX'.

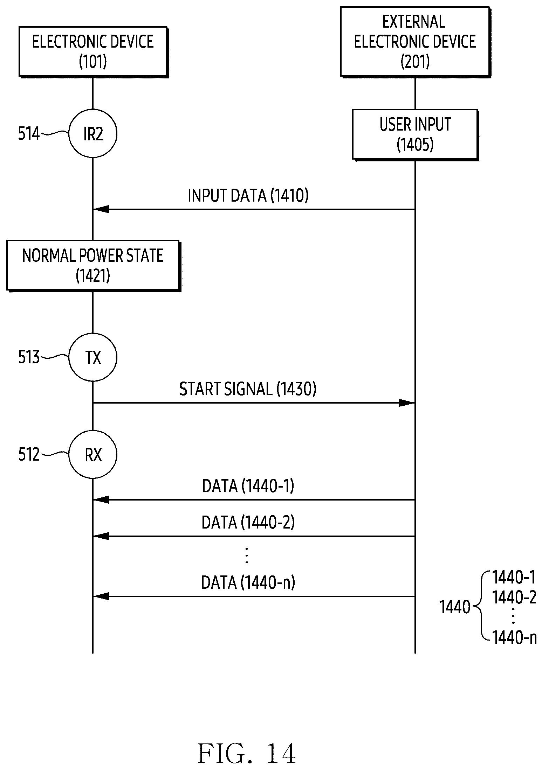

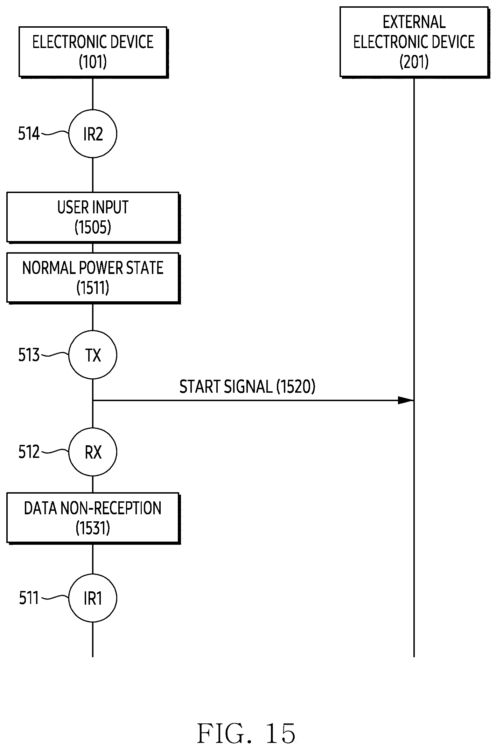

In response to receiving the response signal 1320, the electronic device 101 may control the RF switch 310 to connect the second interrupt port (e.g., the fourth RF port 514) to the serial interface 320. The second interrupt port 514 may be used to detect an input from the external electronic device 201. The second interrupt port 514 may be used for wake-up according to an input to the external electronic device 201. Since the reception circuit 441 continuously processes data transmitted, its power consumption may be higher than that of an interrupt circuit (e.g., the second interrupt circuit 432). In order to detect an input from the external electronic device 201 with low power, the electronic device 101 may control the RF switch 310 such that the second interrupt port 514 is connected to the serial interface 320. The wake-up operation for changing the state of the electronic device 101 to the normal power state through the second interrupt port 514 will be described with reference to FIGS. 14 and 15.

After connecting the second interrupt port 514 to the serial interface 320, the electronic device 101 may perform monitoring for the second interrupt port 514. For example, the electronic device 101 may again enable monitoring for the disabled second interrupt port 514. For example, in FIG. 12, when switching a port from the first interrupt port 511 to the transmission port 513, the electronic device 101 may disable monitoring for a port (e.g., the first interrupt port 511, the second interrupt port 514) that is not to be used. For example, the interrupt setting for the second interrupt port 514 may be turned off. The electronic device 101 may enable monitoring for the second interrupt port 514 again. The electronic device 101 may change the state of the electronic device 101 from the normal power state to the power saving state 1331. In the power saving state 1331, the electronic device 101 may determine whether data from the external electronic device 201 is received through the second interrupt circuit 432. After transmitting the response signal 1320, the external electronic device 201 may change the state of the external electronic device 201 to the power saving state 1341.

FIG. 14 illustrates an example of a signal flow between an electronic device (e.g., the electronic device 101) and an external electronic device (e.g., the external electronic device 201) for changing from the power saving state to the normal power state according to a keyboard input. In FIG. 14, the RF switch 310 including four ports (e.g., a first interrupt port (e.g., the first RF port 511) IR1, a reception port (e.g., the second RF port 512) RX, a transmission port (e.g., the third RF port 513) TX, and a second interrupt port (e.g., the fourth RF port 514) IR2) is described as an example. The operation of the electronic device 101 of FIG. 14 may be understood as the operation of the processor 120 of the electronic device 101.

Referring to FIG. 14, the RF switch 310 is connecting the second interrupt port 514 to the serial interface 320. The electronic device 101 may monitor an interrupt generated from the external electronic device 201 through the second interrupt circuit 432. The external electronic device 201 may receive a user input 1405 (e.g., a keyboard input or a touch input). According to the user input 1405, the external electronic device 201 may transmit input data 1410 to the electronic device 101. Due to the input data 1410, an interrupt circuit (e.g., the second interrupt circuit 432) connected to the second interrupt port 514 may generate an interrupt. The processor 120 of the electronic device 101 may change the state of the electronic device 101 from the power saving state (e.g., the power saving state 1331) to the normal power state 1421, based on the interrupt. The electronic device 101 may wake up from the power saving state 1331.

The electronic device 101 may use a start signal 1430 to inform the external electronic device 201 that communication is available again. The electronic device 101 may control the RF switch 310 to connect the transmission port 513 to the serial interface 320 to transmit the start signal 1430. The electronic device 101 may transmit the start signal 1430 through the transmission port 513. After transmitting the start signal 1430, the electronic device 101 may control the RF switch 310 to connect the reception port 512 to the serial interface 320. The electronic device 101 may receive data 1440 (e.g., keyboard data, touchpad data, or pen input data) input from the external electronic device 201. The electronic device 101 continuously receives data (e.g., data 1440-1, data 1440-2, data 1440-3, ... data 1440-n) from the external electronic device 201 through the serial communication between the electronic device 101 and the external electronic device 201. The external electronic device 201 may be configured to continuously transmit data 1430 after receiving the start signal 1430. For example, while the external electronic device 201 is connected to the electronic device 101, the external electronic device 201 may continuously transmit input data or check data received from the user to the electronic device 101. Based on the start signal 1430, the external electronic device 201 may be configured to transmit the check data at every regular intervals, even if there is no data (e.g., keyboard data or touchpad data) input from the user.

For example, the serial communication between the electronic device 101 and the external electronic device 201 may include UART communication. After waking up, the state of the electronic device 101 may be 'UART_TX', and the state of the external electronic device 201 may be 'UART_RX'. After the start signal 1430 is transmitted, the state of the electronic device 101 may be changed from 'UART_TX' to 'UART_RX'. After the start signal 1430 is received, the state of the external electronic device 201 may be changed from 'UART_RX' to 'UART_TX'. The electronic device 101 may receive the data 1430 from the external electronic device 201.

FIG. 15 illustrates an example of a signal flow between an electronic device (e.g., the electronic device 101) and an external electronic device (e.g., the external electronic device 201) for changing from the power saving state to the normal power state according to a user input. In FIG. 15, the RF switch 310 including four ports (e.g., a first interrupt port (e.g., the first RF port 511) IR1, a reception port (e.g., the second RF port 512) RX, a transmission port (e.g., the third RF port 513) TX, and a second interrupt port (e.g., the fourth RF port 514) IR2) is described as an example. The operation of the electronic device 101 of FIG. 15 may be understood as the operation of the processor 120 of the electronic device 101.

Referring to FIG. 15, the RF switch 310 is connecting the second interrupt port 514 to the serial interface 320. The electronic device 101 may monitor an interrupt generated from the external electronic device 201 through the second interrupt circuit 432. The electronic device 101 may receive a user input 1505 (e.g., a touch input on the display 210 or an input of depressing a power button of the electronic device 101). The processor 120 of the electronic device 101 may change the state of the electronic device 101 from the power saving state (e.g., the power saving state 1331) to the normal power state 1511, based on the user input 1505. The electronic device 101 may wake up from the power saving state 1331.

The electronic device 101 may use a start signal 1520 to inform the external electronic device 201 that communication is available again. The electronic device 101 may control the RF switch 310 to connect the transmission port 513 to the serial interface 320 to transmit the start signal 1520. The electronic device 101 may transmit the start signal 1520 through the transmission port 513. After transmitting the start signal 1520, the electronic device 101 may control the RF switch 310 to connect the reception port 512 to the serial interface 320. The electronic device 101 may expect to receive data (e.g., keyboard data, touchpad data, and pen input data) input from the external electronic device 201. However, the external electronic device 201 may be in a state of being separated from the electronic device 101.

When the external electronic device 201 is separated from the electronic device 101, the external electronic device 201 may no longer transmit data to the electronic device 101. The electronic device 101 may identify non-reception 1531 of data within a designated period. In other words, if no data is received from the external electronic device 201 within the designated period (e.g., a period set to transmit check data to the external electronic device 201), the electronic device 101 may identify that the external electronic device 201 is separated from the electronic device 101. The electronic device 101 may control the RF switch 310 to identify whether the external electronic device 201 (or another device attached to the serial interface 320) is connected to the electronic device 101. The electronic device 101 (e.g., the processor 120) may control the RF switch 310 to connect the first interrupt port 511 to the serial interface 320. The electronic device 101 may again enable monitoring for the disabled first interrupt port 511.

For example, the serial communication between the electronic device 101 and the external electronic device 201 may include UART communication. After waking up, the state of the electronic device 101 may be 'UART_TX', and the state of the external electronic device 201 may be 'UART_RX'. After the start signal 1520 is transmitted, the state of the electronic device 101 may be changed from 'UART_TX' to 'UART_RX'. However, since the external electronic device 201 is separated from the electronic device 201, the power saving state may be maintained.

In FIG. 15, an example has been described in which the state of the electronic device 101 is changed from the power saving state to the normal power state 1511 according to the user input 1505. As a non-limiting example, the state of the electronic device 101 may be changed from the power saving state to the normal power state 1511, based on receiving a designated notification or an operation according to an internal routine, in addition to the user input 1505.

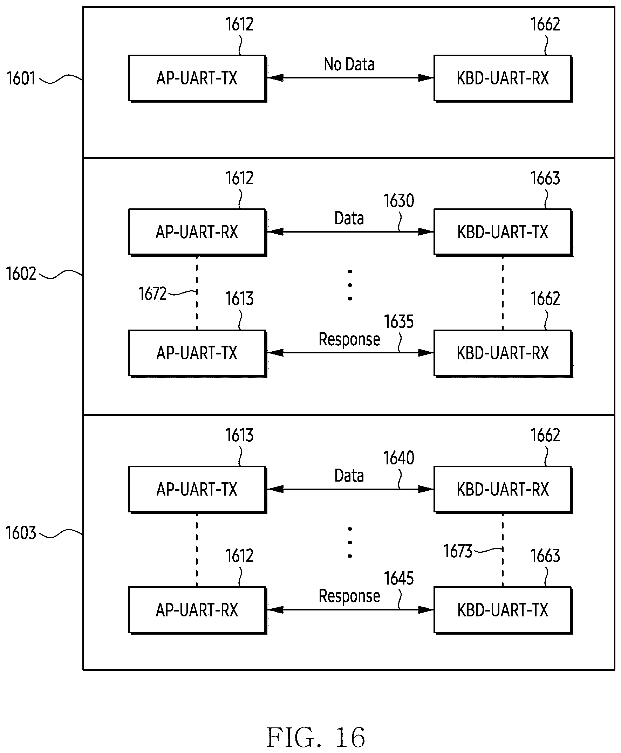

FIG. 16 illustrates an example of data communication between an electronic device (e.g., the electronic device 101) and an external electronic device (e.g., the electronic device 201). For example, serial communication between the electronic device 101 and the external electronic device 201 may include UART communication.

Referring to FIG. 16, a first state 1612 (AP-UART-RX) or a second state 1613 (AP-UART-TX) may be defined depending on whether the state of the processor 120 (e.g., an application processor) is either a transmission state (e.g., the RF switch 310 connecting the transmission port 513) or a reception state (e.g., the RF switch 310 connecting the reception port 512). For example, the external electronic device 201 connected to the electronic device 101 may include a keyboard. A third state 1662 (KBD-UART-RX) or a fourth state 1663 (KBD-UART-TX) may be defined depending on whether the communication state of the external electronic device 201 is the transmission state or the reception state.

According to an embodiment, both the electronic device 101 and the external electronic device 201 may be a the standby state 1601. Since there is no data transmission/reception in the standby state 1601, the electronic device 101 may be in the first state 1612 and the external electronic device 201 may be in the second state 1662. The standby state 1601 may be maintained until a state change event (e.g., receiving a user input or waking up after a lapse of a designated time) of the processor 120 of the electronic device 101 or a state change event (e.g., keyboard input or touchpad input) of the external electronic device 201 occurs.

According to an embodiment, in a first data transmit state 1602 of the external electronic device 201 may transmit data 1630 to the electronic device 101. The state of the external electronic device 201 may be the fourth state 1663. The external electronic device 201 may transmit data 1630. The state of the electronic device 201 may be the first state 1612. The electronic device 101 may receive the data 1630. According to the UART communication scheme, after a predetermined time 1672 has elapsed, a state change may be performed in response to the data 1630. The state of the electronic device 201 may be changed from the first state 1662 to the second state 1663. The electronic device 101 may transmit response data 1635 to the external electronic device 201. The state of the external electronic device 201 may be changed from the fourth state 1663 to the third state 1662. The external electronic device 201 may receive the response data 1635 from the electronic device 101.

According to an embodiment, in the first data transmit state 1603, the electronic device 101 may transmit data 1640 to the external electronic device 201. The state of the electronic device 201 may be the second state 1613. The electronic device 101 may transmit the data 1640. The state of the external electronic device 201 may be the third state 1662. The external electronic device 201 may receive the data 1640. According to the UART communication scheme, after a predetermined time 1673 has elapsed, a state change may be performed in response to the data 1640. The state of the external electronic device 201 may be changed from the third state 1662 to the fourth state 1663. The external electronic device 201 may transmit response data 1645 to the electronic device 101. The state of the electronic device 201 may be changed from the second state 1663 to the first state 1662. The electronic device 101 may receive the response data 1645 from the external electronic device 201.

The electronic device 101 according to embodiments of the disclosure may control a connection state of the serial interface 320 connected to the external electronic device 201, using the RF switch 310. Owing to processing the serial data based on the RF switch 310 and the processor 120 instead of a separate chip (e.g., FPGA or MCU), it may be possible for the electronic device 101 to not only improve its current consumption but also secure more space inside the electronic device 101. In particular, disabling (e.g., interrupt setting off) the monitoring function in the processor 120 may alleviate problems caused due to malfunction for the interrupt according to the ground characteristics of the RF switch 310. As the RF switch 310 is used, timing synchronization errors may be reduced compared to when the processor 120 performs encoding and decoding without the RF switch 310. In addition, additional computing resources for addressing timing errors are not unnecessarily occupied, and thus the efficiency of the processor may be increased.

Effects that are obtainable from the disclosure are not limited to those described above, and other effects not mentioned herein may be clearly understood by those having ordinary knowledge in the technical field to which the disclosure pertains from the following description.

In embodiments, an electronic device 101 is provided. The electronic device 101 comprises a serial interface 320 for connecting to an external electronic device 201, a radio frequency RF switch 310 including a plurality of ports, and at least one processor 120 connected to the RF switch 310. The RF switch 310 may be configured to connect selectively one of the plurality of ports to the serial interface 320. The plurality of ports may include an interrupt port 511 for detecting whether the electronic device 101 and the external electronic device 201 are connected or not. The at least one processor 120 may be configured to: perform a monitoring for the interrupt port 511, while the interrupt port 511 and the serial interface 320 are connected through the RF switch 310; disable, based on detecting a connection between the electronic device 101 and the external electronic device 201 while the monitoring for the interrupt port 511 is performed, the monitoring for the interrupt port 511; and control the RF switch 310 to connect a port different from the interrupt port 511 among the plurality of ports to the serial interface 320 while the monitoring for the interrupt port 511 is disabled. By disabling the monitoring for the interrupt port 511 upon detecting the connection between the electronic device 101 and the external electronic device 201, the electronic device can avoid unintended interrupt on the serial communication, that would be otherwise triggered by an event of e.g., a voltage drop detected at the interrupt port 511 while the monitoring is not disabled.

According to an embodiment, the plurality of ports may include a reception port 512 for receiving a signal from the external electronic device 201.

According to an embodiment, the port connected to the serial interface 320 of the plurality of ports includes a transmission port 513 for transmitting a signal to the external electronic device 201. The at least one processor 120 may be further configured to transmit a start signal to the external electronic device 201 through the RF switch 310 and the serial interface 320, while the transmission port 513 is connected to the serial interface 320, and control the RF switch 310 to connect the reception port 512 of the plurality of ports to the serial interface 320 in response to a transmission of the start signal.

According to an embodiment, the at least one processor 120 may be configured to start a timer and identify whether data is received from the external electronic device 201 within a designated period of the timer or not, in response to a connection between the reception port 512 and the serial interface 320. The at least one processor 120 may be configured to, in case that the data is received from the external electronic device 201 within the designated period of the timer, restart the timer. The at least one processor 120 may be configured to, in case that the timer expires, control the RF switch 310 to connect the interrupt port 511 of the plurality of ports to the serial interface 320.

According to an embodiment, the plurality of ports may include the interrupt port 511, the reception port 512, the transmission port 513, and a secondary interrupt port 514 for a power saving state of the electronic device 101. The at least one processor 120 may be configured to: control the RF switch 310 to connect the transmission port 513 of the plurality of ports to the serial interface 320, based on detecting an event to the power saving state while the external electronic device 201 is connected to the electronic device 101; transmit a stop signal to the external electronic device 201 through the RF switch 310 and the serial interface 320 while the transmission port 513 is connected to the serial interface 320; control the RF switch 310 to connect the secondary interrupt port 514 of the plurality of ports to the serial interface 320 based on the stop signal; and change a state of the electronic device 101 to the power saving state.

According to an embodiment, to control the RF switch 310 to connect the secondary interrupt port 514 to the serial interface 320, the at least one processor 120 may be configured to control the RF switch 310 to connect the reception port 512 of the plurality of ports to the serial interface 320 in response to a transmission of the stop signal, receive a response signal for the stop signal from the external electronic device 201, while the reception port 512 is connected to the serial interface 320, and control the RF switch 310 to connect the secondary interrupt port 514 of the plurality of ports to the serial interface 320, in response to a reception of the response signal.

According to an embodiment, the at least one processor 120 may be further configured to disable, based on detecting the connection between the electronic device 101 and the external electronic device 201 while the monitoring for the interrupt port 511 is performed, a monitoring for the secondary interrupt port 514. The at least one processor 120 may be configured to enable the monitoring for the secondary interrupt port 514 after the secondary interrupt port is connected to the serial interface 320.

According to an embodiment, the at least one processor 120 may be further configured to receive input data from the external electronic device 201 while the secondary interrupt port is connected to the serial interface 320, change the state of the electronic device 101 to a normal power state based on the input data, control the RF switch 310 to connect the transmission port 513 of the plurality of ports to the serial interface 320 in the normal power state, transmit a start signal to the external electronic device 201 through the RF switch 310 and the serial interface 320, while the transmission port 513 is connected to the serial interface 320, and control the RF switch to connect the reception port of the plurality of ports to the serial interface in response to the transmission of the start signal.

According to an embodiment, the at least one processor 120 may be further configured to change the state of the electronic device 101 to the normal power state based on a user input, control the RF switch 310 to connect the transmission port 513 of the plurality of ports to the serial interface 320 in the normal power state, transmit a start signal to the external electronic device 201 through the RF switch 310 and the serial interface 320 while the transmission port 513 is connected to the serial interface 320, and control the RF switch to connect the reception port of the plurality of ports to the serial interface in response to the transmission of the start signal.

According to an embodiment, the at least one processor 120 may be further configured to start a timer and identify whether data is received from the external electronic device 201 within a designated period of the timer or not, in response to a connection between the reception port 512 and the serial interface 320. The at least one processor 120 may be further configured to, in case that the data is received from the external electronic device 201 within the designated period of the timer, restart the timer. The at least one processor 120 may be further configured to control the RF switch 310 to connect the interrupt port 511 of the plurality of ports to the serial interface 320, in case that the timer expires.

According to an embodiment, the RF switch 310 may comprise a single pole four throw (SP4T) for the plurality of ports.

According to an embodiment, the external electronic device 201 may include a keyboard for a user input. The serial interface 320 may include a plurality of pogo pins. The plurality of pogo pins may include a first pogo pin for power, a second pogo pin for serial data, and a third pogo pin for ground.

According to an embodiment, while the port is connected to the serial interface 320 through the RF switch 310, the interrupt port 511 of the RF switch 310 may be connected to a ground. The at least one processor 120 may be configured to cease a processing for an interrupt according to a port change to the port from the interrupt port 511, while the monitoring is disabled.

In embodiments, an electronic device 201 is provided. The electronic device 201 comprises a control circuit 370, at least one input circuit 380, and a serial interface 320 for connecting to an external electronic device 101. The control circuit 370 may be configured to receive a start signal from the external electronic device 201 while the electronic device 101 and the external electronic device 201 are connected, identify whether a user input is received through the at least one input circuit 380 within a designated period, transmit data for the user input to the external electronic device 201 through the serial interface 320, in case that the user input is received through the at least one input circuit 380 within the designated period, and transmit check data to the external electronic device 201, in case that the user input is not received through the at least one input circuit within the designated period. This interaction between the electronic device 201 and the external electronic device 101 facilitates the management of the serial communication in a power- and resource-efficient manner.

According to an embodiment, the control circuit 370 may be configured to receive the stop signal through the serial interface 320 from the external electronic device 201. The control circuit 370 may be configured to transmit a response signal for the stop signal through the serial interface 320 to the external electronic device 201. The control circuit 370 may be configured to operate in a stand-by mode for receiving a signal from the external electronic device 201 after transmitting the response signal.

According to an embodiment, the serial interface 320 may comprise a plurality of pogo pins. The plurality of pogo pins may include a first pogo pin for power, a second pogo pin for serial data, and a third pogo pin for ground.

In embodiments, an electronic device 101 is provided. The electronic device 101 comprises a serial interface 320 for connecting to an external electronic device 201, a radio frequency (RF) switch 310 comprising a plurality of ports, and at least one processor 120 connected to the RF switch 310. The RF switch 310 may be configured to connect selectively one of the plurality of ports to the serial interface 320. The plurality of ports may include a first interrupt port 511 for detecting whether the electronic device 101 and the external electronic device 201 are connected or not, a transmission port 513 for transmitting a signal to the external electronic device 201, a reception port 512 for receiving a signal from the external electronic device 201, and a second interrupt port 514 for a power saving state the electronic device 101. The at least one processor 120 may be configured to: control the RF switch 310 to connect the second interrupt port 514 of the plurality of ports to the serial interface 320, based on detecting an event for entering the power saving state while the external electronic device 201 and the electronic device 101 are connected; change a state of the electronic device 101 from the power saving state to a normal power state, based on input data received from the external electronic device 201 or user input data; control the RF switch 310 to connect the transmission port 513 of the plurality of ports to the serial interface 320 in the normal power state; transmit a start signal to the external electronic device 201 through the RF switch 310 and the serial interface 320 while the transmission port 513 is connected to the serial interface 320; and control the RF switch 310 to connect the reception port 512 of the plurality of ports to the serial interface 320, in response to a transmission of the start signal. The employment of the second interrupt port 514 facilitates the power management of the electronic device 101. In particular, the energy efficiency can be maximized by connecting the second interrupt port 514 to the serial interface 320 when the serial communication does not actively occur and the electronic device 101 is in idle state.

According to an embodiment, the at least one processor 120 may be further configured to identify whether data is received from the external electronic device 201 within a designated period, in response to a connection between the reception port 512 and the serial interface 320, and control the RF switch 310 to connect the first interrupt port 511 of the plurality of ports to the serial interface 320, in case that the data is nor received within the designated period,

According to an embodiment, the at least one processor 120 may be further configured to, after the second interrupt port 514 is connected to the serial interface 320, enable a monitoring for the second interrupt port 514. The at least one processor 120 may be further configured to, after the first interrupt port 511 is connected to the serial interface 320, disable the monitoring for the second interrupt port 514 and enable a monitoring for the first interrupt port 511.

According to an embodiment, the at least one processor 120 may be further configured to identify whether data is received from the external electronic device 201 within a designated period, in response to a connection between the reception port 512 and the serial interface 230; and restart a timer for the designated period, in case that the data is received from the external electronic device 201 within the designated period.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic", "logic block", "part", or "circuit". A module may be a single integral component, or a minimum unit or part thereof, adapted to perform one or more functions. For example, according to an example, the module may be implemented in a form of an application-specific integrated circuit (ASIC).

Various embodiments as set forth herein may be implemented as software (e.g., a program 140) including one or more instructions that are stored in a storage medium (e.g., an internal memory 136 or an external memory 138) that is readable by a machine (e.g., an electronic device 101). For example, a processor (e.g., a processor 120 of an electronic device 101) of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a serial interface (320) for connecting to an external electronic device;
a radio frequency, RF, switch (310) having a plurality of ports including an interrupt port; and
at least one processor (120) connected to the RF switch (310),
wherein the RF switch (310) is configured to connect selectively one of the plurality of ports to the serial interface (320),
wherein the at least one processor (120) is configured to:
monitor the interrupt port to detect whether the external electronic device is connected to the electronic device (101) through the serial interface (320) or not, based on a voltage change while the interrupt port and the serial interface (320) and are connected through the RF switch (310);
in response to detecting that the external electronic device is connected to the electronic device (101) through the serial interface (320), disable the monitoring of the interrupt port; and
control the RF switch (310) to connect a port different from the interrupt port among the plurality of ports to the serial interface (320) after the monitoring of the interrupt port is disabled,
wherein, while the port is connected to the serial interface (320) through the RF switch (310), the interrupt port of the RF switch (310) is connected to a ground.

2. The electronic device (101) of claim 1,
wherein the plurality of ports includes a transmission port for transmitting a signal to the external electronic device and a reception port for receiving a signal from the external electronic device, and
wherein the port connected to the serial interface (320) after the monitoring of the interrupt port is disabled corresponds to the transmission port.

3. The electronic device (101) of claim 2,
wherein the at least one processor (120) is further configured to:
transmit a start signal to the external electronic device through the RF switch (310) and the serial interface (320) while the transmission port is connected to the serial interface (320), and
control the RF switch (310) to connect the reception port of the plurality of ports to the serial interface (320) in response to the transmission of the start signal.

4. The electronic device (101) of claim 3,
wherein the at least one processor (120) is further configured to:
start a timer and identify whether data is received from the external electronic device within a designated period of the timer or not, in response to a connection between the reception port and the serial interface (320);
in case that the data is received from the external electronic device within the designated period of the timer, restart the timer; and
in case that the timer expires, control the RF switch (310) to connect the interrupt port of the plurality of ports to the serial interface (320).

5. The electronic device (101) of claim 3,
wherein the plurality of ports further includes a secondary interrupt port for a power saving state of the electronic device (101),
wherein the at least one processor (120) is further configured to:
control the RF switch (310) to connect the transmission port of the plurality of ports to the serial interface (320), based on detecting an event to the power saving state, while the electronic device (101) and the external electronic device are connected,
transmit a stop signal to the external electronic device through the RF switch (310) and the serial interface (320) while the transmission port is connected to the serial interface (320),
control the RF switch (310) to the secondary interrupt port of the plurality of ports to the serial interface (320) based on the stop signal, and
change a state of the electronic device (101) to the power saving state.

6. The electronic device (101) of claim 5,
wherein the at least one processor (120) is, to control the RF switch (310) to connect the secondary interrupt port to the serial interface (320), configured to:
control the RF switch (310) to the reception port of the plurality of ports to the serial interface (320) in response to a transmission of the stop signal,
receive a response signal for the stop signal from the external electronic device while the reception port is connected to the serial interface (320), and
control the RF switch (310) to the secondary interrupt port of the plurality of ports to the serial interface (320) in response to a reception of the response signal.

7. The electronic device (101) of claim 5 or 6, wherein the at least one processor (120) is further configured to:
disable, based on detecting the connection between the electronic device (101) and the external electronic device while the monitoring of the interrupt port is performed, a monitoring of the secondary interrupt port; and
enable the monitoring of the secondary interrupt port after the secondary interrupt port is connected to the serial interface (320).

8. The electronic device (101) of any one of claims 5 to 7, wherein the at least one processor (120) is further configured to:
receive input data from the external electronic device while the secondary interrupt port is connected to the serial interface (320),
change the state of the electronic device (101) to a normal power state based on the input data;
control the RF switch (310) to connect the transmission port of the plurality of ports to the serial interface (320) in the normal power state;
transmit a start signal to the external electronic device through the RF switch (310) and the serial interface (320) while the transmission port is connected to the serial interface (320); and
control the RF switch (310) to connect the reception port of the plurality of ports to the serial interface (320) in response to the transmission of the start signal.

9. The electronic device (101) of any one of claims 5 to 8, wherein the at least one processor (120) is further configured to:
change the state of the electronic device (101) to a normal power state based on user input;
control the RF switch (310) to connect the transmission port of the plurality of ports to the serial interface (320) in the normal power state;
transmit a start signal to the external electronic device through the RF switch (310) and the serial interface (320), while the transmission port is connected to the serial interface (320); and
control the RF switch (310) to connect the reception port of the plurality of ports to the serial interface (320) in response to the transmission of the start signal.

10. The electronic device (101) of claim 9, wherein the at least one processor (120) is further configured to:
start a timer and identify whether data is received from the external electronic device within a designated period of the timer or not, in response to a connection between the reception port and the serial interface (320);
in case that the data is received from the external electronic device within the designated period of the timer, restart the timer; and
in case that the timer expires, control the RF switch (310) to connect the interrupt port of the plurality of ports to the serial interface (320).

11. The electronic device (101) of any one of the preceding claims, wherein the RF switch (310) comprises a single pole four throw, SP4T, for the plurality of ports.

12. The electronic device (101) of any one of the preceding claims,
wherein the serial interface (320) comprises a plurality of pogo pins, and
wherein the plurality of pogo pins includes a first pogo pin for power, a second pogo pin for serial data, and a third pogo pin for ground.

13. The electronic device (101) of any one of the preceding claims,
wherein the at least one processor (120) is configured to cease a processing for an interrupt according to a port change to the port from the interrupt port, while the monitoring is disabled.

## Patentansprüche

1. Elektronische Vorrichtung (101), umfassend:
eine serielle Schnittstelle (320) zum Verbinden mit einer externen elektronischen Vorrichtung;
einen Hochfrequenz-, HF,-Schalter (310) mit einer Vielzahl von Anschlüssen, die einen Unterbrechungsanschluss umfassen; und
mindestens einen Prozessor (120), der mit dem HF-Schalter (310) verbunden ist,
wobei der HF-Schalter (310) so konfiguriert ist, dass er einen der Vielzahl von Anschlüssen selektiv mit der seriellen Schnittstelle (320) verbindet,
wobei der mindestens eine Prozessor (120) konfiguriert ist zum:
Überwachen des Unterbrechungsanschlusses zum Detektieren, ob die externe elektronische Vorrichtung über die serielle Schnittstelle mit der elektronischen Vorrichtung (101) verbunden ist oder nicht, basierend auf einer Spannungsänderung, während der Unterbrechungsanschluss und die serielle Schnittstelle (320) über den HF-Schalter (310) miteinander verbunden sind;
als Reaktion auf das Detektieren, dass die externe elektronische Vorrichtung über die serielle Schnittstelle (320) mit der elektronischen Vorrichtung (101) verbunden ist, Deaktivieren des Überwachens des Unterbrechungsanschlusses; und
Steuern des HF-Schalters (310) so, dass nach dem Deaktivieren des Überwachens des Unterbrechungsanschlusses ein anderer Anschluss als der Unterbrechungsanschluss aus der Vielzahl von Anschlüssen mit der seriellen Schnittstelle (320) verbunden wird,
wobei, während der Anschluss über den HF-Schalter (310) mit der seriellen Schnittstelle (320) verbunden ist, der Unterbrechungsanschluss des HF-Schalters (310) mit einer Masse verbunden ist.

2. Elektronische Vorrichtung (101) nach Anspruch 1,
wobei die Vielzahl von Anschlüssen einen Übertragungsanschluss zum Übertragen eines Signals an die externe elektronische Vorrichtung und einen Empfangsanschluss zum Empfangen eines Signals von der externen elektronischen Vorrichtung umfasst, und
wobei der Anschluss, der nach dem Deaktivieren des Überwachens des Unterbrechungsanschlusses mit der seriellen Schnittstelle (320) verbunden ist, dem Übertragungsanschluss entspricht.

3. Elektronische Vorrichtung (101) nach Anspruch 2,
wobei der mindestens eine Prozessor (120) ferner konfiguriert ist zum:
Übertragen eines Startsignals über den HF-Schalter (310) und die serielle Schnittstelle (320) an die externe elektronische Vorrichtung, während der Übertragungsanschluss mit der seriellen Schnittstelle (320) verbunden ist, und
Steuern des HF-Schalters (310) zum Verbinden des Empfangsanschlusses der Vielzahl von Anschlüssen mit der seriellen Schnittstelle (320) als Reaktion auf die Übertragung des Startsignals.

4. Elektronische Vorrichtung (101) nach Anspruch 3,
wobei der mindestens eine Prozessor (120) ferner konfiguriert ist zum:
Starten eines Timers und Identifizieren, ob innerhalb einer festgelegten Periode des Timers Daten von der externen elektronischen Vorrichtung empfangen werden oder nicht, als Reaktion auf eine Verbindung zwischen dem Empfangsanschluss und der seriellen Schnittstelle (320);
falls die Daten innerhalb der vom Timer festgelegten Periode von der externen elektronischen Vorrichtung empfangen werden, Neustarten des Timers; und
falls der Timer abläuft, Steuern des HF-Schalters (310) zum Verbinden des Unterbrechungsanschluss der Vielzahl von Anschlüssen mit der seriellen Schnittstelle (320).

5. Elektronische Vorrichtung (101) nach Anspruch 3,
wobei die Vielzahl von Anschlüssen ferner einen sekundären Unterbrechungsanschluss für einen Energiesparzustand der elektronischen Vorrichtung (101) umfasst,
wobei der mindestens eine Prozessor (120) ferner konfiguriert ist zum:
Steuern des HF-Schalters (310) zum Verbinden des Übertragungsanschlusses der Vielzahl von Anschlüssen mit der seriellen Schnittstelle (320) basierend auf dem Detektieren eines Ereignisses, das zum Energiesparzustand führt, während die elektronische Vorrichtung (101) und die externe elektronische Vorrichtung miteinander verbunden sind,
Übertragen eines Stoppsignals über den HF-Schalter (310) und die serielle Schnittstelle (320) an die externe elektronische Vorrichtung, während der Übertragungsanschluss mit der seriellen Schnittstelle (320) verbunden ist, und
Steuern des HF-Schalters (310) auf den sekundären Unterbrechungsanschluss der Vielzahl von Anschlüssen zur seriellen Schnittstelle (320) basierend auf dem Stoppsignal, und
Ändern eines Zustands der elektronischen Vorrichtung (101) zum Energiesparzustand.

6. Elektronische Vorrichtung (101) nach Anspruch 5,
wobei der mindestens eine Prozessor (120) zum Steuern des HF-Schalters (310) zum Verbinden des sekundären Unterbrechungsanschlusses mit der seriellen Schnittstelle (320) konfiguriert ist zum:
Steuern des HF-Schalters (310) auf den Empfangsanschluss der Vielzahl von Anschlüssen zur seriellen Schnittstelle (320) als Reaktion auf eine Übertragung des Stoppsignals,
Empfangen eines Antwortsignals für das Stoppsignal von der externen elektronischen Vorrichtung, während der Empfangsanschluss mit der seriellen Schnittstelle (320) verbunden ist, und
Steuern des HF-Schalters (310) auf den sekundären Unterbrechungsanschluss der Vielzahl von Anschlüssen zur seriellen Schnittstelle (320) als Reaktion auf den Empfang des Antwortsignals.

7. Elektronische Vorrichtung (101) nach Anspruch 5 oder 6, wobei der mindestens eine Prozessor (120) ferner konfiguriert ist zum:
Deaktivieren eines Überwachens des sekundären Unterbrechungsanschlusses basierend auf dem Detektieren der Verbindung zwischen der elektronischen Vorrichtung (101) und der externen elektronischen Vorrichtung, während das Überwachen des Unterbrechungsanschlusses durchgeführt wird; und
Aktivieren des Überwachens des sekundären Unterbrechungsanschlusses, nachdem der sekundäre Unterbrechungsanschluss mit der seriellen Schnittstelle (320) verbunden wurde.

8. Elektronische Vorrichtung (101) nach einem der Ansprüche 5 bis 7, wobei der mindestens eine Prozessor (120) ferner konfiguriert ist zum:
Empfangen von Eingabedaten von der externen elektronischen Vorrichtung, während der sekundäre Unterbrechungsanschluss mit der seriellen Schnittstelle (320) verbunden ist,
Ändern des Zustands der elektronischen Vorrichtung (101) zu einem normalen Leistungszustand basierend auf den Eingabedaten;
Steuern des HF-Schalters (310) zum Verbinden des Übertragungsanschlusses der Vielzahl von Anschlüssen mit der seriellen Schnittstelle (320) im normalen Leistungszustand;
Übertragen eines Startsignals über den HF-Schalter (310) und die serielle Schnittstelle (320) an die externe elektronische Vorrichtung, während der Übertragungsanschluss mit der seriellen Schnittstelle (320) verbunden ist; und
Steuern des HF-Schalters (310) zum Verbinden des Empfangsanschlusses der Vielzahl von Anschlüssen mit der seriellen Schnittstelle (320) als Reaktion auf die Übertragung des Startsignals.

9. Elektronische Vorrichtung (101) nach einem der Ansprüche 5 bis 8, wobei der mindestens eine Prozessor (120) ferner konfiguriert ist zum:
Ändern des Zustands der elektronischen Vorrichtung (101) zu einem normalen Leistungszustand basierend auf einer Benutzereingabe;
Steuern des HF-Schalters (310) zum Verbinden des Übertragungsanschlusses der Vielzahl von Anschlüssen mit der seriellen Schnittstelle (320) im normalen Leistungszustand;
Übertragen eines Startsignals über den HF-Schalter (310) und die serielle Schnittstelle (320) an die externe elektronische Vorrichtung, während der Übertragungsanschluss mit der seriellen Schnittstelle (320) verbunden ist; und
Steuern des HF-Schalters (310) zum Verbinden des Empfangsanschlusses der Vielzahl von Anschlüssen mit der seriellen Schnittstelle (320) als Reaktion auf die Übertragung des Startsignals.

10. Elektronische Vorrichtung (101) nach Anspruch 9, wobei der mindestens eine Prozessor (120) ferner konfiguriert ist zum:
Starten eines Timers und Identifizieren, ob innerhalb einer festgelegten Periode des Timers Daten von der externen elektronischen Vorrichtung empfangen werden oder nicht, als Reaktion auf eine Verbindung zwischen dem Empfangsanschluss und der seriellen Schnittstelle (320);
falls die Daten innerhalb der vom Timer festgelegten Periode von der externen elektronischen Vorrichtung empfangen werden, Neustarten des Timers; und
falls der Timer abläuft, Steuern des HF-Schalters (310) zum Verbinden des Unterbrechungsanschluss der Vielzahl von Anschlüssen mit der seriellen Schnittstelle (320).

11. Elektronische Vorrichtung (101) nach einem der vorhergehenden Ansprüche, wobei der HF-Schalter (310) einen einpoligen Vierwegeschalter (SP4T) für die Vielzahl von Anschlüssen umfasst.

12. Elektronische Vorrichtung (101) nach einem der vorhergehenden Ansprüche,
wobei die serielle Schnittstelle (320) eine Vielzahl von Pogo-Pins umfasst, und
wobei eine Vielzahl von Pogo-Pins einen ersten Pogo-Pin für Leistung, einen zweiten Pogo-Pin für serielle Daten und einen dritten Pogo-Pin für die Masse umfasst.

13. Elektronische Vorrichtung (101) nach einem der vorhergehenden Ansprüche,
wobei der mindestens eine Prozessor (120) so konfiguriert ist, dass er eine Verarbeitung aufgrund einer Unterbrechung entsprechend einer Änderung des Anschlusses vom Unterbrechungsanschluss unterbricht, während die Überwachung deaktiviert ist.

## Revendications

1. Dispositif électronique (101), comprenant :
une interface sérielle (320) permettant la connexion à un dispositif électronique externe ;
un commutateur radiofréquence, RF, (310) comportant une pluralité de ports comprenant un port d'interruption ; et
au moins un processeur (120) connecté électriquement au commutateur RF (310),
dans lequel le commutateur RF (310) est configuré pour connecter de manière sélective l'un de la pluralité de ports à l'interface sérielle (320),
dans lequel l'au moins un processeur (120) est en outre configuré pour :
surveiller le port d'interruption afin de détecter si le dispositif électronique externe est connecté ou non au dispositif électronique (101) via l'interface sérielle (320), en se basant sur une modification de tension lorsque le port d'interruption et l'interface sérielle (320) sont connectés via le commutateur RF (310) ;
en réponse à la détection du fait que le dispositif électronique externe est connecté au dispositif électronique (101) via l'interface sérielle (320), désactiver la surveillance du port d'interruption ; et
commander le commutateur RF (310) afin de connecter un port, autre que le port d'interruption, parmi la pluralité de ports, à l'interface sérielle (320) après la désactivation de la surveillance du port d'interruption,
dans lequel, lorsque le port est connecté à l'interface sérielle (320) via le commutateur RF (310), le port d'interruption du commutateur RF (310) est connecté à une masse.

2. Dispositif électronique (101) selon la revendication 1,
dans lequel la pluralité de ports comprend un port d'émission destiné à transmettre un signal au dispositif électronique externe et un port de réception destiné à recevoir un signal provenant du dispositif électronique externe, et
dans lequel le port connecté à l'interface sérielle (320) après la désactivation de la surveillance du port d'interruption correspond au port d'émission.

3. Dispositif électronique (101) selon la revendication 2,
dans lequel l'au moins un processeur (120) est en outre configuré pour :
transmettre un signal de démarrage au dispositif électronique externe via le commutateur RF (310) et l'interface sérielle (320) lorsque le port d'émission est connecté à l'interface sérielle (320), et
commander le commutateur RF (310) afin de connecter le port de réception de la pluralité de ports à l'interface sérielle (320) en réponse à la transmission du signal de démarrage.

4. Dispositif électronique (101) selon la revendication 3,
dans lequel l'au moins un processeur (120) est en outre configuré pour :
lancer un temporisateur et déterminer si des données sont reçues depuis le dispositif électronique externe au cours d'une période définie par le temporisateur, en réponse à une connexion entre le port de réception et l'interface sérielle (320) ;
si les données externe sont reçues depuis le dispositif électronique pendant la durée définie par le temporisateur, relancer le temporisateur ; et
si le temporisateur expire, commander le commutateur RF (310) afin de connecter le port d'interruption de la pluralité de ports à l'interface sérielle (320).

5. Dispositif électronique (101) selon la revendication 3,
dans lequel la pluralité de ports comprend en outre un port d'interruption secondaire destiné à un état d'économie d'énergie du dispositif électronique (101),
dans lequel l'au moins un processeur (120) est en outre configuré pour :
commander le commutateur RF (310) afin de connecter le port d'émission parmi la pluralité de ports à l'interface sérielle (320), en se basant sur la détection d'un événement marquant le passage en mode d'économie d'énergie, alors que le dispositif électronique (101) et le dispositif électronique externe sont connectés,
transmettre un signal d'arrêt au dispositif électronique externe via le commutateur RF (310) et l'interface sérielle (320) lorsque le port d'émission est connecté à l'interface sérielle (320),
commander le commutateur RF (310) vers le port d'interruption secondaire de la pluralité de ports de l'interface sérielle (320) en se basant sur le signal d'arrêt, et
changer l'état du dispositif électronique (101) en mode d'économie d'énergie.

6. Dispositif électronique (101) selon la revendication 5,
dans lequel l'au moins un processeur (120), afin de commander le commutateur RF (310) pour connecter le port d'interruption secondaire à l'interface sérielle (320), est configuré pour :
commander le commutateur RF (310) pour le faire passer au port de réception de la pluralité de ports à l'interface sérielle (320) en réponse à une transmission du signal d'arrêt,
recevoir un signal de réponse pour le signal d'arrêt depuis le dispositif électronique externe pendant que le port de réception est connecté à l'interface sérielle (320), et
commander le commutateur RF (310) pour le faire passer au port d'interruption secondaire de la pluralité de ports à l'interface sérielle (320) en réponse à la réception du signal de réponse.

7. Dispositif électronique (101) de la revendication 5 ou 6, dans lequel l'au moins un processeur (120) est en outre configuré pour :
désactiver, en se basant sur la détection de la connexion entre le dispositif électronique (101) et le dispositif électronique externe pendant que la surveillance du port d'interruption est effectuée, une surveillance du port d'interruption secondaire ; et
activer la surveillance du port d'interruption secondaire après que le port d'interruption est connecté à l'interface sérielle (320).

8. Dispositif électronique (101) selon l'une quelconque des revendications 5 à 7, dans lequel l'au moins un processeur est en outre configuré pour :
recevoir des données d'entrée depuis le dispositif électronique externe lorsque le port d'interruption secondaire est connecté à l'interface sérielle (320),
changer l'état du dispositif électronique (101) en un état de puissance normal en se basant sur les données d'entrée ;
commander le commutateur RF (310) afin de connecter le port d'émission de la pluralité de ports à l'interface sérielle (320) en état de puissance normal ;
transmettre un signal de démarrage au dispositif électronique externe via le commutateur RF (310) et l'interface sérielle (320) lorsque le port d'émission est connecté à l'interface sérielle (320) ; et
commander le commutateur RF (310) afin de connecter le port de réception de la pluralité de ports à l'interface sérielle (320) en réponse à la transmission du signal de démarrage.

9. Dispositif électronique (101) selon l'une quelconque des revendications 5 à 8, dans lequel l'au moins un processeur est en outre configuré pour :
changer l'état du dispositif électronique (101) en un état de puissance normal en se basant sur une entrée utilisateur ;
commander le commutateur RF (310) afin de connecter le port d'émission de la pluralité de ports à l'interface sérielle (320) en état de puissance normal ;
transmettre un signal de démarrage au dispositif électronique externe via le commutateur RF (310) et l'interface sérielle (320), tandis que le port d'émission est connecté à l'interface sérielle (320) ; et
commander le commutateur RF (310) afin de connecter le port de réception de la pluralité de ports à l'interface sérielle (320) en réponse à la transmission du signal de démarrage.

10. Dispositif électronique (101) de la revendication 9, dans lequel l'au moins un processeur (120) est en outre configuré pour :
lancer un temporisateur et déterminer si des données sont reçues depuis le dispositif électronique externe au cours d'une période définie par le temporisateur, en réponse à une connexion entre le port de réception et l'interface sérielle (320) ;
si les données externe sont reçues depuis le dispositif électronique pendant la durée définie par le temporisateur, relancer le temporisateur ; et
si le temporisateur expire, commander le commutateur RF (310) afin de connecter le port d'interruption de la pluralité de ports à l'interface sérielle (320).

11. Dispositif électronique (101) selon l'une quelconque des revendications précédentes, dans lequel le commutateur RF (310) comprend un commutateur unipolaire à quatre positions (SP4T) pour la pluralité de ports.

12. Dispositif électronique (101) selon l'une quelconque des revendications précédentes,
dans lequel l'interface sérielle (320) comprend une pluralité de broches pogo, et
dans lequel la pluralité de broches pogo comprend une première broche pogo pour l'alimentation, une deuxième broche pogo pour des données sérielles et une troisième broche pogo pour la masse.

13. Dispositif électronique (101) selon l'une quelconque des revendications précédentes,
dans lequel l'au moins un processeur (120) est configuré pour interrompre le traitement lors d'une interruption en fonction d'un changement de port vers le port à partir du port d'interruption, tandis que la surveillance est désactivée.
